(19) Europäisches Patentamt / European Patent Office / Office européen des brevets

(11) **EP 3 974 068 B1**

(12) **EUROPEAN PATENT SPECIFICATION**

(45) Date of publication and mention
of the grant of the patent:
**10.09.2025  Bulletin 2025/37**

(21) Application number: **20810582.5**

(22) Date of filing: **19.05.2020**

(51) International Patent Classification (IPC):
**B05D 1/26** *(2006.01)*    **B05D 3/00** *(2006.01)*
**B05D 3/06** *(2006.01)*    **B05D 5/06** *(2006.01)*
**B05D 7/24** *(2006.01)*    **G02B 1/111** *(2015.01)*
**G02B 5/28** *(2006.01)*    **B32B 7/023** *(2019.01)*

(52) Cooperative Patent Classification (CPC):
**G02B 1/111**

(86) International application number:
**PCT/JP2020/020815**

(87) International publication number:
**WO 2020/235695 (26.11.2020 Gazette 2020/48)**

(54) **COATING MEMBER AND PRODUCTION METHOD FOR COATING MEMBER**

BESCHICHTUNGSELEMENT UND VERFAHREN ZUR HERSTELLUNG DES
BESCHICHTUNGSELEMENTS

ÉLÉMENT DE REVÊTEMENT ET PROCÉDÉ DE PRODUCTION D'UN ÉLÉMENT DE REVÊTEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.05.2019  JP 2019095592**

(43) Date of publication of application:
**30.03.2022  Bulletin 2022/13**

(73) Proprietor: **Nippon Paint Automotive Coatings
Co., Ltd.
Hirakata-shi, Osaka 573-1153 (JP)**

(72) Inventors:
• **KOBAYASHI, Kazuhito
Hirakata-shi, Osaka 573-1153 (JP)**

• **HOSOKAWA, Takeki
Hirakata-shi, Osaka 573-1153 (JP)**
• **OKADA, Takuma
Hirakata-shi, Osaka 573-1153 (JP)**
• **TAKAHASHI, Kazuya
Hirakata-shi, Osaka 573-1153 (JP)**

(74) Representative: **Mewburn Ellis LLP
Aurora Building
Counterslip
Bristol BS1 6BX (GB)**

(56) References cited:
**EP-A1- 3 006 969        WO-A1-2008/123101
WO-A1-2008/126528      WO-A1-2013/140811
WO-A1-2014/196148      WO-A1-2017/170246
JP-A- 2014 206 688      JP-A- 2016 045 230
US-A1- 2011 051 246**

**Description**

TECHNICAL FIELD

The present disclosure relates to a coating member and a method for producing a coating member.

BACKGROUND ART

Displays are used in a wide variety of fields such as computers, televisions, cellular phones, portable information terminal devices (tablet personal computers, mobile devices, electronic notebooks, etc.), and automobile display panels such as digital meters, instrument panels, navigation devices, console panels, center clusters, and heater control panels. Such a product is often provided with a film and a coating film both having an anti-reflection function.

JP-A-2012-088684 (Patent Literature 1) discloses, for example, a display front panel that is placed on a viewer side with respect to a display unit of a liquid crystal display and has a display region and a non-display region, in which an anti-reflection film is formed in the display region and a design layer is formed in the non-display region.

CITATIONS LIST

PATENT LITERATURE

Patent Literature 1: JP-A-2012-088684
Other relevant prior art has been published as WO 2008/126528 A1.

SUMMARY OF INVENTION

TECHNICAL PROBLEMS

As disclosed in Patent Literature 1, recent display products are required to have not only an anti-reflection property but also a design property.

However, the display front panel described in Patent Literature 1 requires a step of matching the interface between a display region and a non-display region with the interface between a region where an anti-reflection film exists and a region where no anti-reflection film exists, and in addition, the region where the anti-reflection film exists and the region where no anti-reflection film exists are formed of different film materials. Therefore, the display front panel of Patent Literature 1 may allow light leakage, diffused reflection, etc. to occur at a boundary portion between the display region and the non-display region. Furthermore, it may not be able to exhibit sufficient design property.

In addition, in recent years, there is a trend to provide various sensors on a display. For this reason, it is predicted that in any of the anti-reflection film and the design layer disposed on the outermost layer of a display product, the functions of these sensors are required not to be inhibited in the future.

The present invention solves the above problems, and an object of the present invention is to provide a coating member capable of improving both an anti-reflection property and a design property.

SOLUTIONS TO PROBLEMS

In order to solve the above-described problems, the present invention is defined by the features of the appended claims.

ADVANTAGEOUS EFFECTS OF INVENTION

The coating member of the present disclosure can be superior in anti-reflection property and design property.

BRIEF DESCRIPTION OF DRAWINGS

FIG. 1A is a measurement result regarding the reflectance of a substrate layer.
FIG. 1B is a measurement result regarding the reflectance of the coating member of Example 1.
FIG. 2 is a measurement result regarding the reflectance of the coating member of Example 2.
FIG. 3 is a measurement result regarding the reflectance of the coating member of Example 3.

FIG. 4 is a measurement result regarding the reflectance of the coating member of Example 4.
FIG. 5 is a measurement result regarding the reflectance of the coating member of Example 5.
FIG. 6 is a measurement result regarding the reflectance of the coating member of Example 6.
FIG. 7 is a measurement result regarding the reflectance of the coating member of Example 7.
FIG. 8 is a measurement result regarding the reflectance of the coating member of Example 8.
FIG. 9 is a measurement result regarding the reflectance of the coating member of Example 9.
FIG. 10 is a measurement result regarding the reflectance of the coating member of Example 10.
FIG. 11 is a measurement result regarding the reflectance of the coating member of Example 11.
FIG. 12 is a measurement result regarding the reflectance of the coating member of Example 12.
FIG. 13 is a measurement result regarding the reflectance of the coating member of Example 13.
FIG. 14 is a measurement result regarding the reflectance of the coating member of Example 14.
FIG. 15 is a measurement result regarding the reflectance of the coating member of Example 15.
FIG. 16 is a measurement result regarding the reflectance of the coating member of Example 16.
FIG. 17 is a measurement result regarding the reflectance of the coating member of Example 17.
FIG. 18 is a measurement result regarding the reflectance of the coating member of Example 18.

DESCRIPTION OF EMBODIMENTS

The process leading to the accomplishment of the present invention will be described. The inventors of the present application have conducted various studies in order to solve the above-described problems.

For example, improving the anti-reflection property tended to make the design property monotonous. On the other hand, improving the design property tended to complicate the step of manufacturing the coating member.

In addition, as described in Patent Literature 1, in the coating member obtained through the step of forming a region having an anti-reflection function and the step of forming a region having a design property, not only light reflection occurs or light leakage occurs in these boundary regions, but also the design property may be simple.

Therefore, as a result of intensive studies, the present inventors have accomplished the present invention, and have completed a coating member capable of solving the above problems.

The coating member of the present disclosure is

a coating member comprising a substrate layer and an optical interference layer formed from an optical interference layer-forming composition, wherein
the optical interference layer is disposed on a part of a viewing side surface of the substrate layer,
the optical interference layer is in a range of more than 0 nm and less than or equal to 600 nm,
the optical interference layer has a relationship of 0.08 < (a refractive index of the substrate layer) - (a refractive index of the optical interference layer) < 0.45,
the optical interference layer-forming composition is a composition for inkjet coating, and
the optical interference layer is an optical interference layer formed by an inkjet method.

Further, the coating member according to the present disclosure is a coating member comprising a substrate layer and an optical interference layer formed from an optical interference layer-forming composition, wherein

the optical interference layer is disposed on at least a part of a viewing side surface of the substrate layer,
the optical interference layer is in a range of more than 0 nm and less than or equal to 600 nm and has a minimum thickness ($t_{min}$) and a maximum thickness ($t_{max}$),
the optical interference layer has a relationship of the minimum thickness ($t_{min}$) < the maximum thickness ($t_{max}$), the optical interference layer has a relationship of 0.08 < (a refractive index of the substrate layer) - (a refractive index of the optical interference layer) < 0.45,
the optical interference layer-forming composition is a composition for inkjet coating, and
the optical interference layer is an optical interference layer formed by an inkjet method.

According to the present disclosure, the optical interference layer has a specific thickness, and in addition, the optical interference layer and the substrate layer have a specific relationship regarding a refractive index. Therefore, a coating member capable of improving both an anti-reflection property and a design property is provided.

For example, since the optical interference layer according to the present disclosure has such a specific refractive index relationship, the optical interference layer can have a superior anti-reflection property.

Further, the optical interference layer is in a range of more than 0 nm and less than or equal to 600 nm, and the optical interference layer has a uniform thickness.

In another embodiment, the optical interference layer has a minimum thickness ($t_{min}$) and a maximum thickness

($t_{max}$) in a range of more than 0 nm and less than or equal to 600 nm, and further has a relationship that the minimum thickness ($t_{min}$) is smaller than the maximum thickness ($t_{max}$), so that interference and reflection of light can be arbitrarily adjusted, and a desired appearance, that is, an appearance superior in design property can be derived.

For example, the optical interference layer can exhibit patterning or gradation. In addition, since the interference of light can be adjusted and the reflectance can also be adjusted, for example, a coating member having a metallic appearance can be provided.

In another embodiment, the optical interference layer can exhibit various colors depending on the viewing angle, how the light impinges, etc.

In addition, the coating member according to the present disclosure can be varied in the thickness of the optical interference layer along its planar direction, that is, the direction perpendicular to the thickness direction of the coating member. For example, when observing the shape of the optical interference layer taken in the cross-sectional direction of the coating member according to the present disclosure (the shape of the optical interference layer in the thickness direction), the optical interference layer may have a gradient, may vary in thickness stepwise, or may have a convex shape. In addition, in the coating member according to the present disclosure, the refractive index of the optical interference layer may be configured along the thickness direction such that the refractive index on the viewing side is substantially the same as the refractive index at a position farthest from the viewing side.

Furthermore, since in the coating member of the present disclosure, an optical interference layer can be formed from a single type of optical interference layer-forming composition, a plurality of types of coating compositions may not be used. Therefore, unintended refraction, reflection, etc. of light that may be caused by using different coating compositions can be suppressed, and a vivid color can be developed.

As described above, the coating member of the present disclosure can have an optical interference layer having a region having an anti-reflection property and a region superior in design property on at least a part of the viewing side surface of the substrate layer. Here, the region having an anti-reflection property and the region superior in design property may be continuously provided, and the region having an anti-reflection property may be the region superior in design property.

For example, the optical interference layer may have a uniform thickness in one embodiment, and may be, in another embodiment, a layer having a gradient in a range of 600 nm or less in thickness from the surface of the substrate layer. In an embodiment, the optical interference layer may be a layer having a flat (uniform) thickness in an area where a particularly superior anti-reflection property is required and having a gradient in a region where a design property is required. In such an embodiment, in the optical interference layer of the present disclosure, a region mainly exhibiting a superior anti-reflection property and a region mainly exhibiting a superior design property can be continuous. Therefore, light leakage, irregular reflection, etc. at a boundary portion between the region exhibiting an anti-reflection property and the region exhibiting a superior design property can be suppressed.

Alternatively, the optical interference layer may have a stepwise layer structure in a range of up to 600 nm in thickness from the surface of the substrate layer, or may have both a portion with a gradient and a stepwise layer structure.

In addition, the coating member of the present disclosure is a coating member capable of arbitrarily changing the reflectance and the transmittance of the surface, and for example, the coating member can have both prevention of reflection by an optical interference technique and a design property such as a metallic tone.

Furthermore, the optical interference layer-forming composition in the present disclosure is a composition for inkjet coating and is also superior in workability. In addition, the coating member has high coating accuracy. Therefore, desired coating can be applied in a designed region, and coloration such as gradation can be more beautifully reproduced. In addition, owing to the fact that the optical interference layer-forming composition is a composition for inkjet coating, the composition can be applied to an arbitrary place without masking a portion where the composition is not to be applied, and thus the composition is superior in processability and productivity.

In addition, it is possible to form an optical interference layer with less unevenness even on a large article to be coated and a seamless article to be coated. For example, patterning can be achieved on the same plane also for such an enlarged article to be coated.

In addition, since an extremely thin optical interference layer can be formed using an inkjet system, the thickness of the entire coating member can be reduced.

Furthermore, the coating member of the present disclosure has physical properties such as a high hardness and scratch resistance.

As described above, the coating member of the present disclosure has an extremely high design property and an anti-reflection ability capable of improving the visibility of a display, etc. and further has superior mechanical properties.

In another embodiment, the optical interference layer may adjust reflectance in a desired region of the coating member. For example, the reflectance at a desired wavelength can be reduced, and light with a desired wavelength can be transmitted. Therefore, characteristics of a sensor that can be provided inside a display can be sufficiently exhibited. Furthermore, the transmittance of light that indicates a desired wavelength range can be improved and the design property of the region with an improved transmittance of the light can be improved. Therefore, a coating member that transmits light required by a sensor or the like and exhibits a superior design property (for example, a metallic appearance) can be obtained.

In addition, the coating member of the present disclosure can have a high crosslinking density, and can be developed to a panel or the like including various sensors.

If necessary, an infrared reflectance can be locally reduced, and for example, an infrared sensor can be mounted in the region. In such an embodiment, an infrared sensor can be mounted such that it is not noticeable from the viewing side, so that the selectivity of the design regarding the coating member is widened. In addition, this can also contribute to improvement of the sensor function.

Furthermore, for example, the coating member of the present disclosure can have a high reflectance at a wavelengths of 380 nm to 780 nm, and can express a metallic tone more beautifully. In addition, for example, it can also express a blue color tone and a red color tone more beautifully. In addition, since highly accurate coating can be performed, a coating member having extremely high design selectivity is provided.

In the coating member of the present disclosure, the optical interference layer is disposed on at least a part of the viewing side surface of the substrate layer. In one embodiment, in the region of the coating member placed in a display unit of a display or the like, the optical interference layer may be disposed on the surface of the substrate layer to exhibit an anti-reflection property.

In the present disclosure, the optical interference layer is in a range of more than 0 nm and less than or equal to 600 nm, and the optical interference layer has a uniform thickness. When the optical interference layer has such a thickness, an optical interference layer superior in both anti-reflection property and design property can be obtained. In addition, an optical interference layer having superior surface smoothness, inhibiting the occurrence of unevenness, and having extremely small unevenness can be obtained, and it can also have high glossiness.

In another embodiment, the optical interference layer has a minimum thickness ($t_{min}$) and a maximum thickness ($t_{max}$) within a range of more than 0 nm and less than or equal to 600 nm, and further has a relationship of minimum thickness ($t_{min}$) < maximum thickness ($t_{max}$).

When the optical interference layer has such a thickness, an optical interference layer superior in both anti-reflection property and design property can be obtained. In addition, an optical interference layer having superior surface smoothness, inhibiting the occurrence of unevenness, and having extremely small unevenness can be obtained, and it can also have high glossiness.

Thanks to having the above-described form, the optical interference layer has a uniform thickness in a range of more than 0 nm and less than or equal to 600 nm on the same surface of the substrate layer, or the thickness is patterned. Further, patterning may be applied in any film thickness (variably).

In one embodiment, the thickness of the optical interference layer is 0.1 nm or more, 1 nm or more, 10 nm or more, 30 nm or more, or 50 nm or more.

For example, the optical interference layer may have a uniform thickness in a range of 0.1 nm or more and 600 nm or less, and in another embodiment, this layer has a minimum thickness ($t_{min}$) and a maximum thickness ($t_{max}$) in such a range, and the minimum thickness ($t_{min}$) and the maximum thickness ($t_{max}$) have a prescribed relationship.

In one embodiment, the maximum thickness ($t_{max}$) may be a maximum thickness within a range selected from the group consisting of a range of 10 nm or more and 500 nm or less, a range of 20 nm or more and 450 nm or less, a range of 25 nm or more and 400 nm or less, a range of 30 nm or more and 350 nm or less, a range of 35 nm or more and 320 nm or less, a range of 40 nm or more and 300 nm or less, and a range of 45 nm or more and 200 nm or less unless deviating from the scope of the present disclosure.

When the maximum thickness ($t_{max}$) is within such a range and satisfies the conditions of the present disclosure, an optical interference layer superior in both an anti-reflection property and design property can be obtained.

In the present disclosure, the maximum thickness ($t_{max}$) of the optical interference layer is determined by calculating an average value in the region having the maximum thickness.

A film thickness can be measured by exposing a cross section with an instrument such as a microtome and observing the cross section with a laser microscope, FE-SEM, or the like.

In the present disclosure, the refractive index of the substrate layer and the refractive index of the optical interference layer have the following relationship:

0.08 < (refractive index of substrate layer) - (refractive index of optical interference layer) < 0.45. For example, the refractive indexes may have a relationship selected from the group consisting of:

0.10 < (refractive index of substrate layer) - (refractive index of optical interference layer) < 0.43, 0.15 < (refractive index of substrate layer) - (refractive index of optical interference layer) < 0.42, 0.18 < (refractive index of substrate layer) - (refractive index of optical interference layer) < 0.41, and 0.20 < (refractive index of substrate layer) - (refractive index of optical interference layer) < 0.40.

When the refractive index of the substrate layer and the refractive index of the optical interference layer have such a relationship, a coating member that can sufficiently exhibit a color tone difference and is superior in the physical properties of the optical interference layer can be obtained.

A refractive index can be measured with an Abbe refractometer by a method in accordance with JIS K0062.

The refractive index of the optical interference layer in the present disclosure is, for example, 1.30 or more and 2.0 or less, and in one embodiment, 1.30 or more and 1.80 or less, for example, 1.30 or more and 1.76 or less, and may be 1.30 or more and 1.60 or less.

In another embodiment, the refractive index of the interference layer is 1.36 or more and 1.80 or less, for example, 1.36 or more and 1.76 or less, and may be 1.36 or more and 1.60 or less.

As long as the refractive index of the optical interference layer is within the scope of the present invention, the optical interference layer may be formed using two or more optical interference layer-forming compositions. For example, in an embodiment in which the optical interference layer has an inclination, the optical interference layer up to the minimum thickness ($t_{min}$) and the optical interference layer from the minimum thickness ($t_{min}$) to the maximum thickness ($t_{max}$) may be designed to differ in refractive index.

When the refractive index of the optical interference layer is within such a range, the coating member can exhibit a superior anti-reflection property. In addition, the reflectance of light at a desired wavelength can be reduced and the characteristics of sensors that can be mounted inside a display can be sufficiently exhibited. Furthermore, the transmittance of light that indicates a desired wavelength range can be improved, and further, the design property of the region with the improved transmittance of the light can be improved. Therefore, a coating member that transmits light required by a sensor or the like and exhibits a superior design property (for example, a metallic appearance) can be obtained.

In one embodiment, in the coating member, where a value of L, a value of a, and a value of b of a hue in the substrate layer are denoted by L(i), a(i), and b(i), and

a value of L, a value of a, and a value of b of a hue of the optical interference layer at a thickness of t (nm) are denoted by $L_t$(ii), at(ii), and bt(ii), and
where t is more than 0 nm and less than or equal to 600 nm,
L(i), a(i), and b(i) in the substrate layer, and
$L_t$(ii), at(ii), and $b_t$(ii) at the thickness of (t) nm in the optical interference layer satisfy at least one of the following formulae (1) to (3):

$$0 < L(i) - L_t(ii) < 35 \qquad \text{Formula (1)}$$

$$-30 < a(i) - a_t(ii) < 30 \qquad \text{Formula (2)}$$

$$-40 < b(i) - b_t(ii) < 40 \qquad \text{Formula (3)}.$$

Thanks to having such a relationship, the interference of light can be adjusted, so that a desired appearance, that is, an appearance superior also in design property can be derived. For example, the optical interference layer can exhibit gradation. In addition, since the interference of light can be adjusted and the reflectance can also be adjusted, for example, a coating member having a metallic appearance can be provided. In another embodiment, the optical interference layer can exhibit various colors depending on the viewing angle, how the light impinges, etc. Furthermore, unevenness of the optical interference layer and unevenness in the boundary region between the substrate layer and the optical interference layer can be suppressed, so that a coating member having a superior design property can be obtained.

In one embodiment, the coating member of the present disclosure may satisfy all of the above formulae (1) to (3) or at least two of them.

In one embodiment, L(i) and Lt(ii) may have the following relationship:

$$-30 < L(i) - Lt(ii) < 35 \qquad \text{Formula (1)}$$

for example,

$$\text{may satisfy the relationship of } -20 < L(i) - Lt(ii) < 35 \qquad \text{Formula (1),}$$

or

$$-10 < L(i) - Lt(ii) < 35 \qquad \text{Formula (1).}$$

Even in the case of having such a relationship, the effects of the present disclosure can be exhibited.

In another embodiment, L(i) and Lt(ii) may have the following relationship. $0 < |L(i) - Lt(ii)| < 35$. Here, the symbol $| \, |$ means an absolute value.

For example, they may have the relationship of $1.5 < |L(i) - Lt(ii)| < 35$ Formula (1).

Even in the case of having such a relationship, the effects of the present disclosure can be exhibited.

In one embodiment, Formula (2) may have a relationship:

$$-30 < a(i) - at(ii) < 30 \qquad \text{Formula (2),}$$

with the proviso that 0 is excluded.

Also various relationships of (a(i) - at(ii)) described in the present disclosure may include embodiments excluding 0.

In another embodiment, a(i) and at(ii) may have the following relationship:

$$0 < |a(i) - at(ii)| < 30 \qquad \text{Formula (2),}$$

**wherein the** symbol $| \, |$ means an absolute value.

Even in the case of having such a relationship, the effects of the present disclosure can be exhibited.

In one embodiment, Formula (3) may have a relationship:

$$-40 < b(i) - b_t(ii) < 40 \qquad \text{Formula (3),}$$

with the proviso that 0 is excluded.

Also various relationships of (b(i) - bt(ii)) described in the present disclosure may include embodiments excluding 0.

In another embodiment, b(i) - bt(ii) may have the following relationship:

$$0 < |b(i) - bt(ii)| < 40 \qquad \text{Formula (3),}$$

wherein the symbol $| \, |$ means an absolute value.

Even in the case of having such a relationship, the effects of the present disclosure can be exhibited.

In the present disclosure, the hue at the thickness of t (nm) in the optical interference layer means the hue of the coating member in which the thickness of the optical interference layer is t (nm). In other words, it means the hue measured for the optical interference layer having the thickness of t (nm) in the coating member having the substrate layer and the optical interference layer according to the present disclosure.

Here, L(i), a(i), and b(i) in the substrate layer may indicate, for example, the following ranges.

$$0 < L(i) < 40$$

$$-30 < a(i) < 30$$

$$-30 < b(i) < 30$$

For example, in an embodiment in which the thickness t in the optical interference layer is 76 nm, $L_t(ii)$, at(ii), and bt(ii) can be denoted by $L_{76}(ii)$, $a_{76}(ii)$, and $b_{76}(ii)$, respectively. Similarly, in an embodiment in which the thickness t is 431 nm, $L_t(ii)$, at(ii), and bt(ii) can be denoted by hues $L_{431}(ii)$, $a_{431}(ii)$, and $b_{431}(ii)$, respectively.

Here, the value of L, the value of a, and the value of b of the hue are determined in accordance with JIS Z8781-4 and JIS Z8781-5, and are indexes to be used to express the color of the article to be measured according to the L*a*b* color system (CIE 1976). In this color system, the value of L represents brightness. In addition, chromaticity, which indicates hue and saturation, is expressed by the values of a and b. The values of a and b are called psychometric chroma coordinates and represent the direction of color. The value of a is based on 0, and when the value is negative, it means that the greenness in the hue of the substance to be measured increases, whereas when the value is positive, the redness increases. In addition, the value of b is based on 0, and when the value is negative, it means that the blueness in the hue of the substance to be measured increases, whereas when the value is positive, it means that the yellowness increases. When both the values a and b are 0, this means an achromatic color having no hue.

For example, the values of L, a, and b of the hue can be measured under the following conditions using SD3000 manufactured by Nippon Denshoku Industries Co., Ltd.

Light source: D65
Measurement method: reflection
Field of view: 10 degrees
Regular reflection light processing: SCI.

In one embodiment,
the coating member of the present disclosure satisfies at least one of the following formulae (1) to (3).

$$1.5 < L(i) - Lt(ii) < 35 \quad \text{Formula (1)}$$

$$-25 < a(i) - a_t(ii) < 25 \quad \text{Formula (2)}$$

$$-35 < b(i) - b_t(ii) < 30 \quad \text{Formula (3)}$$

Here, the thickness t in the optical interference layer can take any value that is more than 0 nm and less than or equal to 600 nm.

Although it should not be construed as being limited to a specific theory, the optical interference layer-forming composition in the present disclosure is a composition for inkjet coating, and the thickness of the optical interference layer can be more finely controlled as compared with a screen printing method, a gravure printing method, a spin coating method, or the like, and for example, the inclination of the thickness of the optical interference layer can be smoothly formed as compared with a screen printing method, a gravure printing method, a spin coating method, or the like.

Further, since the optical interference layer-forming composition in the present disclosure is a composition for inkjet coating, the coating member of the present disclosure is high in coating accuracy. Therefore, desired coating can be applied in a designed region, and coloration such as gradation can be more beautifully reproduced.

Further, it is possible to form an optical interference layer with less unevenness even on a large article to be coated and a seamless article to be coated. As described above, the coating member of the present disclosure can have an extremely high design property.

In addition, since the coating member can have a controlled transmittance of infrared rays or the like in a desired region of the optical interference layer, for example, an increased infrared transmittance while having a high design property, it can be provided with an infrared sensor. Therefore, in a desired region of the optical interference layer, it can exhibit a high infrared transmittance while having a high design property.

In one embodiment, when the thickness t of the optical interference layer is 76 nm,
at least one of the following formulae (1) to (3) is satisfied:

$$10 < L(i) - L_{76}(ii) < 35 \quad \text{Formula (1)}$$

$$-30 < a(i) - a_{76}(ii) < 0 \quad \text{Formula (2)}$$

$$-30 < b(i) - b_{76}(ii) < 0 \quad \text{Formula (3)}.$$

In an embodiment, when the thickness t of the optical interference layer is 120 nm,
at least one of the following formulae (1) to (3) is satisfied:

$$10 < L(i) - L_{120}(ii) < 35 \quad \text{Formula (1)}$$

$$-10 < a(i) - a_{120}(ii) < 5 \qquad \text{Formula (2)}$$

$$0 < b(i) - b_{120}(ii) < 25 \qquad \text{Formula (3).}$$

In one embodiment, when the thickness t of the optical interference layer is 129 nm, at least one of the following formulae (1) to (3) is satisfied:

$$10 < L(i) - L_{129}(ii) < 35 \qquad \text{Formula (1)}$$

$$-10 < a(i) - a_{129}(ii) < 5 \qquad \text{Formula (2)}$$

$$0 < b(i) - b_{129}(ii) < 25 \qquad \text{Formula (3).}$$

In one embodiment, when the thickness t of the optical interference layer is 174 nm, at least one of the following formulae (1) to (3) is satisfied:

$$0 < L(i) - L_{174}(ii) < 10 \qquad \text{Formula (1)}$$

$$0 < a(i) - a_{174}(ii) < 10 \qquad \text{Formula (2)}$$

$$0 < b(i) - b_{174}(ii) < 15 \qquad \text{Formula (3).}$$

In one embodiment, when the thickness t of the optical interference layer is 217 nm, at least one of the following formulae (1) to (3) is satisfied:

$$0 < L(i) - L_{217}(ii) < 10 \qquad \text{Formula (1)}$$

$$0 < a(i) - a_{217}(ii) < 10 \qquad \text{Formula (2)}$$

$$-30 < b(i) - b_{217}(ii) < 0 \qquad \text{Formula (3).}$$

In one embodiment, when the thickness t of the optical interference layer is 260 nm, at least one of the following formulae (1) to (3) is satisfied:

$$0 < L(i) - L_{260}(ii) < 20 \qquad \text{Formula (1)}$$

$$-20 < a(i) - a_{260}(ii) < 0 \qquad \text{Formula (2)}$$

$$-40 < b(i) - b_{260}(ii) < 0 \qquad \text{Formula (3).}$$

In one embodiment, when the thickness t of the optical interference layer is 307 nm, at least one of the following formulae (1) to (3) is satisfied:

$$0 < L(i) - L_{307}(ii) < 25 \qquad \text{Formula (1)}$$

$$-30 < a(i) - a_{307}(ii) < 0 \qquad \text{Formula (2)}$$

$$10 < b(i) - b_{307}(ii) < 40 \quad \text{Formula (3).}$$

In one embodiment, when the thickness t of the optical interference layer is 326 nm, at least one of the following formulae (1) to (3) is satisfied:

$$10 < L(i) - L_{326}(ii) < 25 \quad \text{Formula (1)}$$

$$-20 < a(i) - a_{326}(ii) < 0 \quad \text{Formula (2)}$$

$$10 < b(i) - b_{326}(ii) < 40 \quad \text{Formula (3).}$$

In one embodiment, when the thickness t of the optical interference layer is 379 nm, at least one of the following formulae (1) to (3) is satisfied:

$$0 < L(i) - L_{379}(ii) < 10 \quad \text{Formula (1)}$$

$$10 < a(i) - a_{379}(ii) < 30 \quad \text{Formula (2)}$$

$$-30 < b(i) - b_{379}(ii) < 0 \quad \text{Formula (3).}$$

In one embodiment, when the thickness t of the optical interference layer is 431 nm, at least one of the following formulae (1) to (3) is satisfied:

$$0 < L(i) - L_{431}(ii) < 10 \quad \text{Formula (1)}$$

$$-10 < a(i) - a_{431}(ii) < 10 \quad \text{Formula (2)}$$

$$-30 < b(i) - b_{431}(ii) < 0 \quad \text{Formula (3).}$$

For example, when the optical interference layer has a thickness of 76 nm and a thickness of 431 nm, at least one of the formulae (1) to (3) can be satisfied within a range corresponding to each of the thicknesses.

In one embodiment, in the coating member of the present disclosure, where a value of L, a value of a, and a value of b of a hue in the substrate layer are denoted by L(i), a(i), and b(i), and

a value of L, a value of a, and a value of b of a hue in the optical interference layer at a thickness of t (nm) are defined by $L_t(ii)$, at(ii), and bt(ii), and
where t is more than 0 nm or more and less than or equal to 600 nm,
a difference $\Delta E$ between a hue in the substrate layer and a hue at a thickness of t (nm) in the optical interference layer exhibits a relationship of

$$1 < \Delta E < 50.$$

Here, the color difference $\Delta E$ can be derived in accordance with JIS Z8730:2009. For example, for the substrate layer, the hues L(i), a(i), and b(i) in the substrate layer are measured using a spectrophotometer (product number: SD3000, manufactured by Nippon Denshoku Industries Co., Ltd.) and a D65 light source, and similarly, it can be calculated from the values of the hues $L_t(ii)$, at(ii), and $b_t(ii)$ at an arbitrary thickness t (nm) in the optical interference layer.

For example, a calculation formula of the color difference $\Delta E$ according to the present embodiment is expressed by the following formula.

$$\Delta E = [(\Delta L)^2 + (\Delta a)^2 + (\Delta b)^2]^{1/2}$$

Here, the value of L, the value of a, and the value of b of the hue in the substrate layer are denoted by L(i), a(i), and b(i),

the value of L, the value of a value, and the value of b of the hue at a thickness of t (nm) in the optical interference layer are denoted by $L_t(ii)$, at(ii), and bt(ii), and

$$\Delta L = L(i) - Lt(ii)$$

$$\Delta a = a(i) - a_t(ii)$$

$$\Delta b = b(i) - b_t(ii).$$

In one embodiment, the color difference $\Delta E$ is 2 or more and 50 or less, for example, 5 or more and 45 or less.

Thanks to having such a relationship, interference of light can be more effectively adjusted, and an appearance superior also in design property can be derived. For example, the optical interference layer can exhibit patterning or gradation. In addition, since the interference of light can be adjusted and the reflectance can also be adjusted, for example, a coating member having a metallic appearance can be provided. In another embodiment, the optical interference layer can exhibit various colors depending on the viewing angle, how the light impinges, etc. Furthermore, unevenness of the optical interference layer and unevenness in the boundary region between the substrate layer and the optical interference layer can be suppressed, so that a coating member having a superior design property can be obtained.

In one embodiment, the coating member of the present disclosure may satisfy all of the above formulae (1) to (3) or at least two of them.

In one embodiment, the reflectance of the substrate layer is 0.1 to 20%, for example, 3% to 11%, in a region of 380 nm to 780 nm, and in another embodiment, 8% to 11%.

In one embodiment, the reflectance of the coating member (that is, a member having a substrate layer and an optical interference layer) of the present disclosure measured at a position where the thickness of the optical interference layer is 76 nm is 0.1 to 10%, for example, 1% to 5%, in a region of 380 nm to 780 nm.

When the reflectance is within such a range, the reflectance and the transmittance of the surface of the coating member can be arbitrarily varied, and for example, the coating member can have both anti-reflection by an optical interference technique and a design property such as a metallic tone.

In one embodiment, the reflectance of the coating member (that is, a member having a substrate layer and an optical interference layer) of the present disclosure measured at a position where the thickness of the optical interference layer is 260 nm is 0% to 11% in a region of 380 nm to 780 nm.

When the reflectance is within such a range, the reflectance and the transmittance of the surface of the coating member can be arbitrarily varied, and for example, the coating member can have both anti-reflection by an optical interference technique and a design property such as a metallic tone.

In the present disclosure, the optical interference layer has an arbitrary film thickness as long as it is included in the scope of the present disclosure. For example, the thickness at any position of the optical interference layer may be 76 nm, and the thickness at any other position may be 260 nm. In this embodiment, the coating member of the present disclosure can exhibit optical characteristics such as the above-described reflectance at each film thickness, and can exhibit various physical properties, for example, optical characteristics depending on the position where various physical properties of the optical interference layer are measured.

Therefore, interference of light can be adjusted more effectively, and an appearance superior in design property can be derived.

Hereinafter, the substrate layer and the optical interference layer formed from the optical interference layer-forming composition that constitute the coating member according to the present disclosure will be described.

(Optical interference layer)

The optical interference layer of the present disclosure is a layer formed from an optical interference layer-forming composition. For example, the optical interference layer-forming composition comprises an optical interference layer-forming resin component, and the optical interference layer-forming composition is a composition for inkjet coating.

Since the optical interference layer-forming composition is a composition for inkjet coating, film thickness control and patterning can be performed with extremely high accuracy. In addition, the occurrence of unevenness can be reduced or suppressed.

In one embodiment, the optical interference layer-forming composition comprises 300 parts by mass or more and 9900 parts by mass or less of an organic solvent per 100 parts by mass of the resin solid content. In another embodiment,

EP 3 974 068 B1

the optical interference layer-forming composition comprises 100 parts by mass or more and 8000 parts by mass or less, for example, 100 parts by mass or more and 4000 parts by mass or less of an organic solvent per 100 parts by mass of the resin solid content.

In the embodiment in which the optical interference layer-forming composition comprises an optical interference layer-forming resin component, "100 parts by mass of the resin solid content" means that the total solid content of the resin components in the optical interference layer-forming resin component is 100 parts by mass.

Thanks to containing the organic solvent in such a range, the optical interference layer-forming composition can be suitably applied by an inkjet method, and can be applied in an optimum composition amount according to a designed design.

Since the optical interference layer of the present disclosure is a layer formed by applying the specific optical interference layer-forming composition according to the present disclosure using inkjet coating, the film thickness of the optical interference layer can be designed more finely in various ranges. For example, the optical interference layer can exhibit more complicated patterning or gradation. In addition, since the interference of light can be more finely adjusted and the reflectance can also be more finely adjusted, for example, a coating member having a metallic appearance can be provided.

In another embodiment, the optical interference layer can exhibit various colors depending on the viewing angle, how the light impinges, etc. Furthermore, unevenness of the optical interference layer and unevenness in the boundary region between the substrate layer and the optical interference layer can be suppressed, so that a coating member having a superior design property can be obtained.

In one embodiment, the optical interference layer-forming resin component is an active energy ray-curable resin component having an unsaturated double bond.

The optical interference layer-forming composition may comprise a polyfunctional acrylate and a fluororesin, or may comprise a polyfunctional acrylate, a silicone-modified acrylate, and a fluororesin.

The active energy ray-curable resin component is a monomer, oligomer, or polymer (also referred to as resin) that can be crosslinked and cured by active energy rays (for example, ultraviolet rays).

Specific examples of such an active energy ray-curable resin component include a monomer, oligomer or polymer having at least one unsaturated double bond group, more specifically a (meth)acrylate monomer, a (meth)acrylate oligomer, a (meth)acrylate polymer, a urethane (meth)acrylate monomer, a urethane (meth)acrylate oligomer, a urethane (meth)acrylate polymer, and a silicone (meth)acrylate, which each have at least one unsaturated double bond group, and modified monomers, oligomers, and polymers thereof. These monomers, oligomers, polymers, etc. may be used in combination.

Here, "(meth)acrylate" means acrylate and/or methacrylate. In one embodiment, the optical interference layer-forming composition comprises an unsaturated double bond-containing acrylic resin (also referred to as an unsaturated double bond-containing acrylic polymer).

In one embodiment, the optical interference layer-forming composition may comprise a non-reactive acrylic resin. In addition, the optical interference layer-forming composition may comprise an unsaturated double bond-containing acrylic resin and/or a non-reactive acrylic resin.

The optical interference layer-forming composition may comprise, for example, a plurality of unsaturated double bond-containing acrylic resins and/or non-reactive acrylic resins.

For example, the optical interference layer-forming composition comprises an unsaturated double bond-containing acrylic resin and/or a non-reactive acrylic resin each having a weight-average molecular weight (Mw) of 5000 to 100000. In one embodiment, the unsaturated double bond-containing acrylic resin and/or the non-reactive acrylic resin may have a weight-average molecular weight (Mw) of 5000 or more and 100000 or less, for example, a weight-average molecular weight (Mw) of 6000 or more and 95000 or less. The weight-average molecular weight (Mw) can be calculated by a known method.

In another embodiment, when the active energy ray-curable resin component comprises a plurality of polymers, one polymer may have a weight-average molecular weight (Mw) of 5000 or more and 100000 or less, and another type of polymer may have a weight-average molecular weight (Mw) of 10000 or more and 80000 or less. In addition, polymers differing in the range of weight-average molecular weight (Mw) may be contained. Owing to using polymers having various weight-average molecular weight ranges in combination, the optical interference layer can exhibit high smoothness and workability.

Thanks to containing such an unsaturated double bond-containing acrylic resin and/or a non-reactive acrylic resin, the composition can be molded even into a complicated shape and can suppress the occurrence of defective products when being molded, and a molding further enhanced in hardness, abrasion resistance, chemical resistance, etc. can be obtained.

In one embodiment, the optical interference layer-forming composition comprises an unsaturated double bond-containing acrylic resin and/or a non-reactive acrylic resin, and a polyfunctional urethane (meth)acrylate. For example, the optical interference layer-forming composition comprises an unsaturated double bond-containing acrylic resin and/or a non-reactive acrylic resin each having a weight-average molecular weight (Mw) of 5000 to 100000, and a polyfunctional urethane (meth)acrylate having an acrylate equivalent of 100 to 200.

In the present description, the non-reactive acrylic resin is an acrylic resin that does not react or exhibits almost no reactivity even when irradiated with active energy rays, and for example, is an acrylic resin that does not react or exhibit almost no reactivity even when irradiated with ultraviolet rays.

The acrylate equivalent of the polyfunctional urethane (meth)acrylate is, for example, 100 or more and 200 or less, for example, the acrylate equivalent is 110 or more and 180 or less, and in another embodiment, the acrylate equivalent is 115 or more and 160 or less.

Thanks to containing such a polyfunctional urethane (meth)acrylate and the acrylic resin as described above, a molded article having a superior appearance can be obtained without causing defects such as cracks even being in a complicated shape.

In addition, a molded article superior in abrasion resistance and chemical resistance and high in hardness can be obtained.

In one embodiment, the optical interference layer-forming composition comprises an unsaturated double bond-containing acrylic resin and/or a non-reactive acrylic resin, a polyfunctional silicone (meth)acrylate, a fluororesin, and inorganic oxidized fine particles.

For example, the optical interference layer-forming composition comprises an unsaturated double bond-containing acrylic resin and/or a non-reactive acrylic resin, a polyfunctional silicone (meth)acrylate having a weight-average molecular weight (Mw) of 700 to 100000, a fluororesin, and inorganic oxidized fine particles.

Although it should not be interpreted only in a specific theory, the inclusion of a polyfunctional silicone (meth)acrylate allows for low surface tension, a superior leveling property, and reduced tackiness. Meanwhile, by virtue of containing a fluororesin, slipperiness can be imparted to the coating layer (coating film). Further, by virtue of containing inorganic oxidized fine particle, superior abrasion resistance can be imparted and tackiness can be reduced.

The weight-average molecular weight (Mw) of the polyfunctional silicone (meth)acrylate is, for example, 700 or more and 100000 or less, 800 or more and 90000 or less in one embodiment, and 800 or more and 85000 or less in another embodiment.

In one embodiment, the fluororesin has a fluorine content of 0.1% by weight or more and 80% by weight or less, for example, 5 or more and 75% by weight or less.

For example, the optical interference layer-forming composition comprises an unsaturated double bond-containing acrylic resin and/or a non-reactive acrylic resin in an amount of more than 0.1 parts by mass and less than or equal to 80 parts by mass, for example, 3.0 parts by mass or more and 60 parts by mass or less, and in one embodiment 5.0 parts by mass or more and 60 parts by mass or less, per 100 parts by mass of the solid content contained in the composition. When the optical interference layer-forming composition contains a plurality of types of unsaturated double bond-containing acrylic resin and/or non-reactive acrylic resin, the total amount of the plurality of types of unsaturated double bond-containing acrylic resin and/or non-reactive acrylic resin is preferably within the above range.

In one embodiment, the optical interference layer-forming composition comprises the polyfunctional urethane (meth)acrylate in an amount of 3.0 parts by mass or more and 100 parts by mass or less, for example, 5.0 parts by mass or more and 95 parts by mass or less, and in another embodiment, 13 parts by mass or more and 68 parts by mass or less, per 100 parts by mass of the resin solid content contained in the composition.

In one embodiment, the optical interference layer-forming composition contains a polyfunctional silicone (meth)acrylate in an amount of 0.1 parts by mass or more and 100 parts by mass or less, for example, 0.1 parts by mass or more and 95 parts by mass or less, in another embodiment, 0.3 parts by mass or more ad 50 parts by mass or less, per 100 parts by mass of the solid content contained in the composition.

In one embodiment, the optical interference layer-forming composition contains a fluororesin in an amount of 0.01 parts by mass or more and 100 parts by mass or less, for example, 0.1 parts by mass or more and 95 parts by mass or less, and in another embodiment, 0.5 parts by mass or more and 50 parts by mass or less, per 100 parts by mass of the solid content contained in the composition.

From the viewpoint that the crosslinking density after curing can be increased and the effect of improving surface hardness can be enhanced, the optical interference layer-forming composition according to the present disclosure preferably contains at least one compound selected from among polyfunctional (meth)acrylate compounds, polyfunctional urethane (meth)acrylate compounds, and polyfunctional silicone (meth)acrylate compounds, such as polyfunctional (meth)acrylate compounds such as polyfunctional (meth)acrylate monomers, polyfunctional (meth)acrylate oligomers, or polyfunctional (meth)acrylate polymers; polyfunctional urethane (meth)acrylate compounds such as polyfunctional urethane (meth)acrylate monomers, polyfunctional urethane (meth)acrylate oligomers, and polyfunctional urethane (meth)acrylate polymers; and

polyfunctional silicone (meth)acrylate compounds such as polyfunctional silicone (meth)acrylate monomers, polyfunctional silicone (meth)acrylate oligomers, or polyfunctional silicone (meth)acrylate polymers.

As the (meth)acrylate monomer or oligomer having one unsaturated double bond group, a commercially available product may be used. Examples of such a commercially available product include methyl (meth)acrylate, ethyl (meth)acrylate, n-butyl (meth)acrylate, isobutyl (meth)acrylate, 2-ethylhexyl (meth)acrylate, acrylic acid, methacrylic acid, isostearyl (meth)acrylate, ethoxylated o-phenylphenol acrylate, methoxypolyethylene glycol acrylate, methoxypolyethylene glycol acrylate, phenoxypolyethylene glycol acrylate, 2-acryloyloxyethyl succinate, 2-hydroxyethyl (meth)acrylate, 2-hydroxypropyl (meth)acrylate, ethylene glycol mono(meth)acrylate, propylene glycol mono(meth)acrylate, 2-hydroxy-3-methoxypropyl (meth)acrylate, N-methylol(meth)acrylamide, and N-hydroxy(meth)acrylamide.

As the polyfunctional (meth)acrylate monomer or oligomer, a commercially available product may be used. As such a commercially available product, for example, DPHA (produced by Daicel-Allnex Ltd.), PETRA (produced by Daicel-Allnex Ltd., pentaerythritol triacrylate), PETIA (produced by Daicel-Allnex Ltd.), ARONIX M-403 (produced by Toagosei Co., Ltd., dipentaerythritol penta and hexaacrylate), ARONIX M-402 (produced by Toagosei Co., Ltd., dipentaerythritol penta and hexaacrylate), ARONIX M-400 (produced by Toagosei Co., Ltd., dipentaerythritol penta and hexaacrylate), SR-399 (produced by Arkema, dipentaerythritol hydroxypentaacrylate), KAYARAD DPHA (produced by Nippon Kayaku Co., Ltd.), KAYARAD DPHA-2C (produced by Nippon Kayaku Co., Ltd.), M-404, M-405, M-406, M-450, M-305, M-309, M-310, M-315, M-320, TO-1200, TO-1231, TO-595, TO-756 (produced by Toagosei Co., Ltd.), KAYARD D-310, D-330, DPHA, DPHA-2C (produced by Nippon Kayaku Co., Ltd.), etc. can be used.

Examples of the monofunctional or polyfunctional (meth)acrylate polymer include high molecular weight compounds of the above-described monofunctional or polyfunctional (meth)acrylate monomers or oligomers.

In the present description, the various polymers mentioned above may be simply referred to as an unsaturated double bond-containing acrylic polymer or an unsaturated double bond-containing acrylic resin.

As the polyfunctional urethane (meth)acrylate monomer or oligomer, a commercially available product may be used. As such a commercially available product, bifunctional urethane (meth)acrylates ("UX-2201", "UX-8101", and "UX-6101" produced by Nippon Kayaku Co., Ltd., "UF-8001" and "UF-8003" produced by Kyoeisha Chemical Co., Ltd., "Ebecryl 244", "Ebecryl 284", "Ebecryl 2002", "Ebecryl 4835", "Ebecryl 4883", "Ebecryl 8807", and "Ebecryl 6700" produced by Daicel-Allnex Ltd.); trifunctional urethane (meth)acrylates ("Ebecryl 254", "Ebecryl 264", and "Ebecryl 265" produced by Daicel-Allnex Ltd.); tetrafunctional urethane (meth)acrylates ("Ebecryl8210" produced by Daicel-Allnex Ltd.); hexafunctional urethane (meth)acrylates ("Ebecryl 1290k", "Ebecryl 5129", "Ebecryl 220", "KRM8200", and "Ebecryl 1290N" produced by Daicel-Allnex Ltd.); nonafunctional urethane (meth)acrylates ("KRM 7804" produced by Daicel-Allnex Ltd.); decafunctional urethane (meth)acrylates ("KRM 8452" and "KRM 8509" produced by Daicel-Allnex Co., Ltd.); and pentadecafunctional urethane (meth)acrylates ("KRM 8655" produced by Daicel-Allnex Ltd.), etc. can be used.

The monofunctional or polyfunctional urethane (meth)acrylate monomers or oligomers can be prepared, for example, by reacting a polycarbonate diol, a (meth)acrylate compound containing a hydroxyl group and an unsaturated double bond group in the molecule thereof, and a polyisocyanate.

Examples of the monofunctional or polyfunctional urethane (meth)acrylate polymer include high molecular weight compounds of the above-described monofunctional or polyfunctional urethane (meth)acrylate monomers or oligomers.

The polyfunctional silicone (meth)acrylate monomer or oligomer is a compound having a silicone skeleton. For example, the compound having a silicone skeleton may have a fluorine atom-containing group, and the fluororesin may have a silicone skeleton.

As the polyfunctional silicone (meth)acrylate monomer or oligomer, a commercially available product may be used. Examples of the commercially available product include the following.

Compounds having methacryloyl group and acryloyl group
Manufactured by BYK: BYK-UV3500 and BYK-UV3570
Manufactured by Shin-Etsu Chemical Co., Ltd.: Shin-Etsu Silicone X-22-164, Shin-Etsu Silicone X-22-164AS, Shin-Etsu Silicone X-22-164A, Shin-Etsu Silicone X-22-164B, Shin-Etsu Silicone X-22-164C, Shin-Etsu Silicone X-22-164E, Shin-Etsu Silicone X-22-174DX, Shin-Etsu Silicone X-22-2426, Shin-Etsu Silicone X-22-2475, KER-4000-UV, KER-4700-UV, KER-4710-UV, and KER-4800-UV
Manufactured by JNC: FM-0711, FM-0721, FM-0725, TM-0701, FM-7711, FM-7721, and FM-7725

Evonik Japan:

TEGO(registered trademark) Rad 2010, TEGO(registered trademark) Rad **2011,** TEGO(registered trademark) Rad 2100, TEGO(registered trademark) Rad 2200, TEGO(registered trademark) Rad 2300, TEGO(registered trademark) Rad 2400, TEGO(registered trademark) Rad 2500, etc.
Material having fluorine atom-containing group containing (meth)acryloyl group and material in which fluororesin has compound having silicone skeleton

Manufactured by The Nippon Synthetic Chemical Industry Co., Ltd.: Shikoh UV-AF305

T&K TOKA: ZX-212 and ZX-214-A

Manufactured by Shin-Etsu Chemical Co., Ltd.: KY-1203, etc.

The optical interference layer-forming composition may comprise, for example, a fluorine-based resin in addition to the above-described resins. When the composition contains the fluorine-based resin, the abrasion resistance of a molded article can be further improved.

In the present disclosure, the fluorine-based resin means a fluorine-containing resin containing no compound having a silicone skeleton. Examples thereof include perfluorooctyl acrylate and acrylic-modified perfluoropolyether. In the fluorine-containing resin, functional groups of a methacryloyl group and an acryloyl group may have been modified.

The fluorine-based resin may be, for example, the following commercially available products.

Manufactured by DIC Corporation: MEGAFAC RS-72-K, MEGAFAC RS-75, MEGAFAC RS-76-E, MEGAFAC RS-76-NS, and MEGAFAC RS-77

Manufactured by Daikin Industries, Ltd.: OPTOOL DAC-HP

Manufactured by Solvay Solexis, Inc.: FLUOROLINK MD 700 and FLUOROLINK AD 1700

Manufactured by NEOS Co., Ltd.: FTERGENT 601ADH2, etc.

The optical interference layer-forming composition may comprise organic fine particles and/or inorganic oxidized fine particles.

Examples of the inorganic oxidized fine particles include silica ($SiO_2$) particles, hollow silica particles, magnesium fluoride particles, alumina particles, titania particles, tin oxide particles, antimony-doped tin oxide (abbreviation: ATO) particles, and zinc oxide particles. Furthermore, those with functional groups modified are also available. The functional group is desirably a (meth)acryloyl group. Examples of the organic fine particles include acrylic fine particles, hollow acrylic fine particles, polystyrene fine particles, and melamine fine particles. The organic fine particles and the inorganic oxidized fine particles, for example, the primary particle diameters of the organic fine particles and the inorganic oxidized fine particles are 5 nm to 100 nm from the viewpoint of transparency and coating material stability. The average particle diameter of the particulate material referred to herein is a value measured using image processing software from an image taken with a cross-sectional electron microscope.

For example, by blending inorganic oxidized fine particles, volume shrinkage can be alleviated with respect to an uncured coating film. Further, for example, by blending inorganic oxidized fine particles, rigidity can be imparted to a coating film in addition to the above effects.

Further, by blending the inorganic oxidized fine particles, it is possible to suppress the occurrence of curling or the like due to curing shrinkage in a cured coating film, and for example, by blending the inorganic oxidized fine particles, abrasion resistance can be imparted in addition to the above effects.

(Photoinitiator)

The optical interference layer-forming composition of the present invention preferably contains a photoinitiator. By virtue of the existence of the photoinitiator, resin components are well polymerized by active energy rays, such as ultraviolet rays. Examples of the photoinitiator include alkylphenone-based photoinitiators, acylphosphine oxide-based photoinitiators, titanocene-based photoinitiators, and oxime ester-based polymerization initiators. Examples of the alkylphenone-based photoinitiators include 2,2-dimethoxy-1,2-diphenylethan-1-one, 1-hydroxy-cyclohexyl-phenyl-ketone, 2-hydroxy-2-methyl-1-phenyl-propan-1-one, 1-[4-(2-hydroxyethoxy)-phenyl]-2-hydroxy-2-methyl-1-propan-1-one, 2-hydroxy-1-{4-[4-(2-hydroxy-2-methylpropionyl)-benzyl]phenyl}-2-methyl-propan-1-one, 2-methyl-1-(4-methylthiophenyl)-2-morpholinopropan-1-one, 2-benzyl-2-dimethylamino-1-(4-morpholinophenyl)butanone-1, and 2-(dimethylamino)-2-[(4-methylphenyl)methyl]-1-[4-(4-morpholinyl)phenyl]-1-butanone. Examples of the acylphosphine oxide-based photoinitiators include 2,4,6-trimethylbenzoyl-diphenyl-phosphine oxide and bis(2,4,6-trimethylbenzoyl)-phenylphosphine oxide. Examples of the titanocene-based photoinitiators include bis($\eta$5-2,4-cyclopentadien-1-yl)-bis(2,6-difluoro-3-(1H-pyrrol-1-yl)-phenyl)titanium. Examples of the oxime ester-based polymerization initiator include 1,2-octanedione, 1-[4-(phenylthio)-, 2-(O-benzoyloxime)], ethanone, 1-[9-ethyl-6-(2-methylbenzoyl)-9H-carbazol-3-yl]-, 1-(0-acetyloxime), oxyphenylacetic acid, 2-[2-oxo-2-phenylacetoxyethoxy]ethyl ester, and 2-(2-hydroxyethoxy)ethyl ester. Such photoinitiators may be used singly, or two or more species thereof may be used in combination.

Among the above-mentioned photoinitiators, 2-hydroxy-2-methyl-1-phenyl-propan-1-one, 1-hydroxy-cyclohexyl-phenyl-ketone, 2-methyl-1-(4-methylthiophenyl)-2-morpholinopropan-1-one, 2-benzyl-2-dimethylamino-1-(4-morpholinophenyl)-butanone-1, and 2,2-dimethoxy-1,2-diphenylethan-1-one are preferably used.

A preferable amount of the photoinitiator is 0.01 to 10 parts by mass, for example, 1 to 10 parts by mass per 100 parts by mass of the resin solid content of the optical interference layer-forming composition. Photoinitiators may be used singly or two or more photoinitiators may be used in combination.

(Solvent)

The optical interference layer-forming composition may comprise a solvent.

The solvent is not particularly limited and may be selected at an appropriate time in consideration of the components contained in the composition, the type of the substrate to be coated, the method of applying the composition, etc. Specific examples of solvents that can be used include aromatic solvents such as toluene and xylene; ketone solvents such as methyl ethyl ketone, acetone, methyl isobutyl ketone, and cyclohexanone; ether solvents such as diethyl ether, isopropyl ether, tetrahydrofuran, dioxane, ethylene glycol dimethyl ether, ethylene glycol diethyl ether, diethylene glycol dimethyl ether, diethylene glycol diethyl ether, propylene glycol monomethyl ether (PGM), anisole, and phenetole; ester solvents such as ethyl acetate, butyl acetate, isopropyl acetate, and ethylene glycol diacetate; amide solvents such as dimethylformamide, diethylformamide, and N-methylpyrrolidone; cellosolve solvents such as methyl cellosolve, ethyl cellosolve, and butyl cellosolve; alcohol solvents such as methanol, ethanol, propanol, isopropyl alcohol, butanol, and isobutyl alcohol; and halogen-containing solvents such as dichloromethane and chloroform. Such solvents may be used singly, or two or more species thereof may be used in combination. Of these solvents, ester solvents, ether solvents, alcohol solvents, and ketone solvents are preferably used.

In one embodiment, the optical interference layer-forming composition has a viscosity of 0.5 to 50 cP, for example, 1 to 40 cP. This makes it possible to more favorably exhibit uniformity during film formation, stability during inkjet discharge, and storage stability of the composition.

In one embodiment, the optical interference layer-forming composition has a surface tension of 10 to 40 mN/m, for example, a surface tension of 15 to 35 mN/m. In another embodiment, the surface tension is 20 to 30 mN/m. This makes it possible to more favorably exhibit uniformity during film formation, stability during inkjet discharge, and storage stability of the composition.

Various additives may be added to the optical interference layer-forming composition as necessary as long as the effect exhibited by the coating member of the present disclosure is not impaired. Examples of such additives include conventional additives such as antistatic agents, plasticizers, surfactants, antioxidants, ultraviolet absorbers, surface conditioners, and leveling agents.

The optical interference layer-forming composition can be prepared by a method commonly practiced by those skilled in the art. For example, it can be prepared by mixing the above-described components by using a commonly used mixing device such as a paint shaker and a mixer.

(Substrate layer)

The substrate layer according to the present disclosure can be appropriately chosen as long as specific conditions in the present disclosure are satisfied. For example, the substrate layer may be a single layer or may include multiple layers. In one embodiment, the substrate layer may have a structure having a high refractive index layer, a medium refractive index layer, and a base layer (for example, a hard coat layer) in order when viewed from the side adjacent to the optical interference layer according to the present disclosure, namely, from the viewing side. Further, a substrate may be provided on a surface of the base layer opposite from the medium refractive index layer.

In one embodiment, the substrate layer has at least a base layer and a substrate in order when viewed from the side adjacent to the optical interference layer according to the present disclosure, namely, from the viewing side.

In one embodiment, the high refractive index layer has a thickness of 10 nm or more and 300 nm or less, for example, 10 nm or more and 200 nm or less. The refractive index of the high refractive index layer can be appropriately chosen according to the refractive index of the optical interference layer according to the present disclosure, and is, for example, in the range of 1.45 or more and 2.00 or less.

In one embodiment, the medium refractive index layer has a thickness of 10 nm or more and 300 nm or less, for example, 10 nm or more and 200 nm or less. The refractive index of the medium refractive index layer can be appropriately chosen according to the refractive index of the optical interference layer according to the present disclosure, and can be set within the range of 1.45 or more and 1.70 or less. For example, in an embodiment including the high refractive index layer, the medium refractive index layer can have a value of refractive index lower than the refractive index exhibited by the high refractive index layer and higher than the refractive index of the optical interference layer according to the present disclosure.

In one embodiment, the thickness of the base layer is in the range of 0.1 to 100 μm, for example, in the range of 1 to 30 μm, and in another embodiment, in the range of 1.5 to 15 μm. When the thickness of the base layer is in this range, adhesion to the substrate and the surface hardness of the substrate layer are increased. In addition, the refractive index of the base layer can be set within the range of 1.45 or more and 1.70 or less. In one embodiment, the refractive index of the base layer is less than the refractive index of the high refractive index layer and/or the refractive index of the medium refractive index layer.

Examples of the resins for forming the high refractive index layer, the medium refractive index layer, and the base layer which the substrate layer can have include epoxy resins, phenol resins, melamine resins, alkyd resins, isocyanate resins, acrylic resins, polyester resins, urethane resins, and siloxane resins. Examples of these resins include thermosetting, ultraviolet-curable, and electron beam-curable resins. These resins may be used singly or two or more thereof may be used in combination. In addition, inorganic fine particles having a high refractive index may be blended in these resins.

The compositions for forming the high refractive index layer and the medium refractive index layer may contain inorganic oxidized fine particles. The inorganic oxidized fine particles may be inorganic oxidized fine particles having a surface modified with an unsaturated double bond.

Examples of the inorganic oxidized fine particles include silica ($SiO_2$) particles, alumina particles, titania particles, zirconia oxide particles, tin oxide particles, antimony-doped tin oxide (abbreviation: ATO) particles, and zinc oxide particles. For example, those having a functional group modified are desirable. The functional group is desirably a (meth) acryloyl group. The inorganic oxidized fine particles, for example, the primary particle size of the inorganic oxidized fine particles is 5 nm to 100 nm from the viewpoint of transparency and coating material stability. The average particle diameter of the particulate material referred to herein is a value measured using image processing software from an image taken with a cross-sectional electron microscope.

For example, by blending inorganic oxidized fine particles, volume shrinkage can be alleviated with respect to an uncured coating film. Further, for example, by blending inorganic oxidized fine particles, rigidity can be imparted to a coating film in addition to the above effects.

Further, by blending the inorganic oxidized fine particles, it is possible to suppress the occurrence of curling or the like due to curing shrinkage in a cured coating film, and for example, by blending the inorganic oxidized fine particles, abrasion resistance can be imparted in addition to the above effects.

For example, commercially available inorganic oxidized fine particles may be used, and examples of alumina particles include:

AS-15 0I, AS-150T manufactured by Sumitomo Osaka Cement Co., Ltd.; and
NANOBYK-3601, NANOBYK -3602, and NANOBYK-3610 manufactured by BYK Japan KK.

Examples of zirconia oxide particles include:

SZR-K and SZR-KM manufactured by Sakai Chemical Industry Co., Ltd.;
ZRANB 15 WT%-P02, ZRMIBK 15 WT%-P01, and ZRMIBK 15 WT%-F85 manufactured by CIK NanoTek Corporation; and
NANON5 ZR-010 and NANON5 ZR-020 manufactured by Solar Co., Ltd.

Examples of the substrate contained in the substrate layer of the present disclosure include resin substrates, such as films of polycarbonate, films of polyester, such as polyethylene terephthalate and polyethylene naphthalate; films of cellulose, such as diacetyl cellulose and triacetyl cellulose; and films of acrylic substance, such as polymethyl methacrylate. These resin substrates may be transparent resin substrates.

Further, examples of the resin substrate according to the present disclosure include resin substrates, such as films of styrene-based substances such as polystyrene and acrylonitrile-styrene copolymers; films of olefin-based substances such as polyvinyl chloride, polyethylene, polypropylene, polyolefins having a cyclic or norbornene structure, and ethylene-propylene copolymers; and films of amide-based substances such as nylon and aromatic polyamides. These resin substrates may be transparent resin substrates.

Further, examples of the resin substrate according to the present disclosure include resin substrates made of polyimide, polysulfone, polyether sulfone, polyether ether ketone, polyphenylene sulfide, polyvinyl alcohol, polyvinylidene chloride, polyvinyl butyral, polyallylate, polyoxymethylene, epoxy resin, or a blend of these polymers. These resin substrates may be transparent resin substrates.

Further, the resin substrate according to the present disclosure may be a laminate of a plurality of resin substrates. For example, the resin substrate may be a laminated member made of a film or sheet of an acrylic resin and a film or sheet of a polycarbonate-based resin. Such a laminated member may be a transparent laminated member.

As the resin substrate according to the present disclosure, a resin substrate with a low optical birefringence, a resin substrate with a phase difference controlled to *1/4* of a wavelength (e.g., 550 nm), i.e., $\lambda/4$, or 1/2, of a wavelength, i.e., $\lambda/2$, or a resin substrate with an uncontrolled birefringence can be selected from those resin substrates appropriately in view of its use.

The thickness of the film substrate may be, for example, 0.01 mm or more and 5 mm or less.

(Method for producing coating member)

In another embodiment, the present disclosure provides a method for producing a coating member comprising:

applying the optical interference layer-forming composition according to the present disclosure to at least a part of a viewing side surface of the substrate layer by an inkjet method; and
applying an active energy ray to form the optical interference layer. The coating member according to the present disclosure can be produced using this method.

In the present disclosure, the optical interference layer-forming composition can be applied to the substrate layer using an inkjet method. The method of the inkjet method is not limited, and it is possible to use a known method, for example, a charge control method using an electrostatic attraction force, a drop-on-demand method (pressure pulse method) using a vibration pressure of a piezo element, an acoustic inkjet method in which an electric signal is converted into an acoustic beam, the optical interference layer-forming composition is irradiated with the acoustic beam, and the optical interference layer-forming composition is discharged using a radiation pressure, or a thermal inkjet method in which bubbles are formed by heating the optical interference layer-forming composition, and the generated pressure is used.

The optical interference layer is formed by curing the optical interference layer-forming composition applied to the substrate layer. This curing can be carried out by irradiation with a light source that emits active energy rays with a required wavelength. Examples of the irradiation include ultraviolet rays, and for example, light having an integral dose of 1 to 5000 mJ/cm$^2$ can be applied. For example, by irradiating with light having an integral dose of more than 100 mJ/cm$^2$ and less than or equal to 1000 mJ/cm$^2$, the characteristics of the optical interference layer can be fully exhibited and the optical interference layer can be formed more efficiently.

The wavelength of the irradiation light is not particularly limited and, for example, ultraviolet light having a wavelength of 380 nm or less can be used. Such light can be obtained by using a high pressure mercury lamp, an extra-high pressure mercury lamp, or the like.

(Decorative layer)

The coating member of the present disclosure may further have a decorative layer as necessary, and for example, may have a decorative layer on a side of the substrate layer opposite from the optical interference layer.

The decorative layer is a layer that provides a laminate member for decoration according to the present disclosure with decoration such as patterns, characters, or metallic luster. Examples of such a decorative layer include a printed layer or a vapor-deposited layer. Both the printed layer and the vapor-deposited layer are layers mainly intended to provide decoration.

In the present disclosure, either one of the printed layer and the vapor-deposited layer may be provided as the decorative layer, or both the printed layer and the vapor-deposited layer may be provided. The printed layer may be a layer composed of a plurality of layers. For example, the decorative layer is a printed layer.

The printed layer is a layer that provides the surface of a molding with decoration such as patterns and/or characters. Examples of the printed layer include patterns composed of woody textures, stone-like textures, cloth-like textures, sand-like textures, geometrical figures, characters, and whole solid. As the material for the printed layer, a colored ink may be used which contains resins such as polyvinyl-based resins including vinyl chloride/vinyl acetate-based copolymer, polyamide-based resins, polyester-based resins, polyacrylic resins, polyurethane-based resins, polyvinyl acetal-based resins, polyester urethane-based resins, cellulose ester-based resins, alkyd resins, and chlorinated polyolefin-based resins as a binder, and a pigment or dye with a suitable color as a coloring agent.

As the pigment of the ink to be used for the printed layer, for example, the following can be used. Ordinarily, as the pigment, there can be used azo pigments such as polyazo, organic pigments such as isoindolinone, or inorganic pigments such as titanium nickel antimony oxide as a yellow pigment; azo pigments such as polyazo, organic pigments such as quinacridone, or inorganic pigments such as iron red as a red pigment; organic pigments such as phthalocyanine blue or inorganic pigments such as cobalt blue as a blue pigment; organic pigments such as aniline black as a black pigment; and inorganic pigments such as titanium dioxide as a white pigment.

As the dye of the ink to be used for the printed layer, various known dyes may be used to an extent not impairing the effect of the present invention. As the method of printing the ink, it is preferable to use a known printing method such as an offset printing method, a gravure printing method, and a screen printing method or a known coating method such as a roll coating method or a spray coating method.

The vapor-deposited layer can be formed by a vacuum vapor deposition method, a sputtering method, an ion plating method, a plating method, or the like using at least one metal selected from the group comprising aluminum, nickel, gold, platinum, chromium, iron, copper, indium, tin, silver, titanium, lead, zinc, etc., or an alloy or compound thereof.

The thickness of the printed layer or the vapor-deposited layer for decoration can be suitably chosen by a method ordinarily used depending on the degree of extension at the time of molding such that a desired surface appearance of a molding can be obtained.

The coating member of the present disclosure can be suitably used as a member to be disposed on a touch panel or a display unit and a sensor member to be disposed around them.

In one embodiment, examples of the display include a liquid crystal display, an organic EL display, and a plasma display. For example, when the decorative molding of the present invention is disposed on a touch panel or a display unit, a surface of the substrate layer opposite from the optical interference layer is laminated on a display surface of the touch panel or the display unit.

The coating member of the present invention can be applied to, for example, automobile components, portable information terminals, household electrical products, furniture, interior furniture, etc., and can be applied to, for example, a member for decoration to be used in a vehicle cabin.

EXAMPLES

The present invention will be described more specifically with reference to the following examples, but the present invention is not limited to the examples. In the examples, "parts" and "%" are on a mass basis unless otherwise indicated.

(Production Example 1)

Preparation of base coating film-forming composition

Using 7 parts by weight of Irgacure 184 (manufactured by IGM Resins B.V.) as a photoinitiator, 100 parts by weight of ARONIX M-305 (manufactured by Toagosei Co., Ltd.) as an ultraviolet curable resin, and propylene glycol monomethyl ether (PGM) as a solvent, and adjusting a solid concentration to 35%, a base coating film-forming composition was prepared. The refractive index after the formation of the coating film was 1.51.

(Production Example 2)

Preparation of medium refractive index layer-forming composition

Using 0.18 parts by weight of Irgacure 127 (IGM) as a photoinitiator, 2.65 parts by weight of ARONIX M-402 (Toagosei Co., Ltd.) as an ultraviolet curable resin, 6.58 parts by weight of ZR-010 (Solar Co., Ltd.) as metal oxide fine particles for adjusting a refractive index, and 90 parts by weight of diacetone alcohol (DAA) as a solvent, a medium refractive index layer-forming composition was prepared. The refractive index after the formation of the coating film was 1.59.

(Production Example 3)

Preparation of high refractive index layer-forming composition

Using 0.17 parts by weight of Irgacure 127 (IGM) as a photoinitiator, 0.72 parts by weight of ARONIX M-402 (Toagosei Co., Ltd.) as an ultraviolet curable resin, 12.43 parts by weight of ZR-010 (Solar Co., Ltd.) as metal oxide fine particles for adjusting a refractive index, and 90 parts by weight of diacetone alcohol (DAA) as a solvent, a high refractive index layer-forming composition was prepared. The refractive index after the formation of the coating film was 1.76.

(Production Example A1)

Production of substrate layer 1

The base coating film-forming composition was applied with a bar coater to one side of a 2.0 mm thick three-layer (PMMA/PC/PMMA) sheet (trade name: MT3LTR, manufactured by Kuraray Co., Ltd.) made of PMMA (polymethyl methacrylate) and PC (polycarbonate) to achieve a dry film thickness of 3.5 $\mu$m, and then the composition was dried at 65°C for 4 minutes to volatilize the solvent, and was cured from the hard coating composition side by a UV irradiation treatment with an integrated light amount of 250 mJ/cm$^2$. Thus, a base layer was formed (refractive index: 1.51).

Then, the medium refractive index layer-forming composition was applied to the base layer with a bar coater to achieve a dry film thickness of 80 nm, dried at 65°C for 4 minutes to volatilize the solvent, and then cured from the medium refractive index layer-forming composition side by an ultraviolet irradiation treatment with an integrated light amount of 250

$mJ/cm^2$. Thus, a medium refractive index layer was formed (refractive index: 1.59).

Furthermore, the high refractive index layer-forming composition was applied to the medium refractive index layer with a bar coater to achieve a dry film thickness of 60 nm, dried at 65°C for 4 minutes to volatilize the solvent, and cured from the high refractive index layer-forming composition side by an ultraviolet irradiation treatment with an integrated light amount of 250 $mJ/cm^2$. Thus, a high refractive index layer was formed (refractive index: 1.76).

In this way, the substrate layer 1 was produced.

(Reference Example 1: Evaluation regarding substrate layer)

To the surface of the obtained substrate layer opposite from the high refractive index layer, screen printing was applied with HF-HSD CONC 710 black (manufactured by Seiko Advance Ltd.). For this test piece, L(i), a(i), and b(i), which are a value of L, a value of a, and a value of b of the hue in the substrate layer, were measured according to the method described in JIS Z 8781-4, JIS Z 8781-5, etc. using an apparatus (product number: SD3000) manufactured by Nippon Denshoku Industries Co., Ltd. The results are in Table 1. Other evaluation items were evaluated in the same manner as various evaluation criteria described in Example 1 described later.

(Production Example A2)

Production of substrate layer 2

The base coating film-forming composition was applied with a bar coater to one side of a 2.0 mm thick three-layer (PMMA/PC/PMMA) sheet (trade name: MT3LTR, manufactured by Kuraray Co., Ltd.) made of PMMA (polymethyl methacrylate) and PC (polycarbonate) to achieve a dry film thickness of 3.5 $\mu$m, and then the composition was dried at 65°C for 4 minutes to volatilize the solvent, and was cured from the hard coating composition side by a UV irradiation treatment with an integrated light amount of 250 $mJ/cm^2$. Thus, a base layer was formed (refractive index: 1.51).

In this way, the substrate layer 2 was produced.

(Preparation Example B1)

Preparation of optical interference layer-forming composition 1

Using 0.63 parts by weight of Irgacure 127 (IGM) as a photoinitiator, 7.46 parts by weight of ARONIX M-402 (Toagosei Co., Ltd.) as an ultraviolet curable resin, 33.72 parts by weight of THRULYA 4320 (manufactured by JGC Catalysts and Chemicals Ltd.) as fine particles for adjusting a refractive index, and propylene glycol monomethyl ether (PGM) as a solvent, an optical interference layer-forming composition 1 was prepared such that the solid concentration was adjusted to 30%.

(Example 1)

On the surface of the obtained substrate layer where the high refractive index layer was formed, the optical interference layer-forming composition 1 obtained in Preparation Example B1 was applied with an inkjet apparatus such that the maximum thickness $t_m$ of the optical interference layer after drying was 76 nm. The composition was dried at 65°C for 4 minutes to volatilize the solvent, and cured from the optical interference layer-forming composition side by an ultraviolet irradiation treatment with an integrated light amount of 250 $mJ/cm^2$. Thus, an optical interference layer was formed.

In this way, a coating member having a substrate layer and an optical interference layer formed from the optical interference layer-forming composition was formed.

(Measurement of thickness)

A test sample was cut into a size of 10 mm × 10 mm, and a cross section of the optical interference layer was exposed with a microtome (LEICA RM 2265). The exposed cross section was observed with FE-SEM (S-4800 manufactured by Hitachi High-Technologies Corporation), the thicknesses of the optical interference layer at 10 points were measured, and the average value of the maximum value and the minimum value was calculated, and thus the minimum thickness ($t_{min}$) and the maximum thickness ($t_{max}$) were calculated.

(Measurement of refractive index)

The refractive index regarding each layer was measured with an Abbe refractometer by a method in accordance with JIS K0062. The refractive index of the optical interference layer was measured in the form of a coating member.

(Evaluation of hue regarding optical interference layer)

To the surface of the coating member obtained in Example 1 opposite from the optical interference layer, screen printing was applied with HF-HSD CONC 710 black (manufactured by Seiko Advance Ltd.). For this test piece, hues $L_{76}(ii)$, $a_{76}(ii)$, and $b_{76}(ii)$ were measured according to a method described in JIS Z 8781-4, JIS Z 8781-5, etc. using (product number: SD3000) manufactured by Nippon Denshoku Industries Co., Ltd.
"$L(i) - L_{76}(ii)$", "$a(i) - a_{76}(ii)$", and "$b(i) - b_{76}(ii)$" were calculated based on the obtained numerical values. The results are shown in Table 1.
Here, the value of L, the value of a, and the value of b measured in Reference Example 1 are denoted by L(i), a(i), and b(i), respectively.

(Calculation of color difference ΔE)

Color difference ΔE was calculated in accordance with JIS Z 8730:2009. The hues L(i), a(i), and b(i) in the substrate layer obtained as described above were measured, and similarly, calculated from the values of the hues $L_{76}(ii)$, $a_{76}(ii)$, and $b_{76}(ii)$ in a region at a thickness of the optical interference layer of 76 nm.
The results are in Table 1.

(Evaluation regarding whether patterning can be attained or not)

To a 150 × 250 mm substrate layer, the optical interference layer-forming composition 1 prepared in Preparation Example B1 was applied by patterning at three 50 mm square places using an inkjet apparatus. The coated surface was evaluated according to the following evaluation criteria.

(Evaluation criteria)

○: The coated surface fits in a range of from a 49 mm square to a 51 mm square.
□: The coated surface fits in a range of from a 48 mm square to a less than 49 mm square or from a more than 51 mm square to a 52 mm square.
×: The coated surface does not fit in a range of from a 48 mm square to a 52 mm square.

(Evaluation regarding unevenness and finish)

To a 150 × 250 mm substrate layer, the optical interference layer-forming composition 1 prepared in Preparation Example B1 was applied by patterning at three 50 mm square places using an inkjet apparatus. For three places of hue on the coated surfaces, the maximum value of the color difference (ΔE) was measured. The maximum value of the color difference (ΔE) was evaluated according to the following criteria.

(Evaluation criteria)

○: Less than or equal to 1.
□: More than 1 and less than or equal to 1.5.
×: More than 1.5.

Evaluation of pencil hardness

The hardness of the optical interference layer in the coating member obtained in Example 1 was evaluated. Pencil hardness was measured according to JIS K5600-5-4 (1999), Scratch hardness (Pencil method).

(Measurement of reflectance)

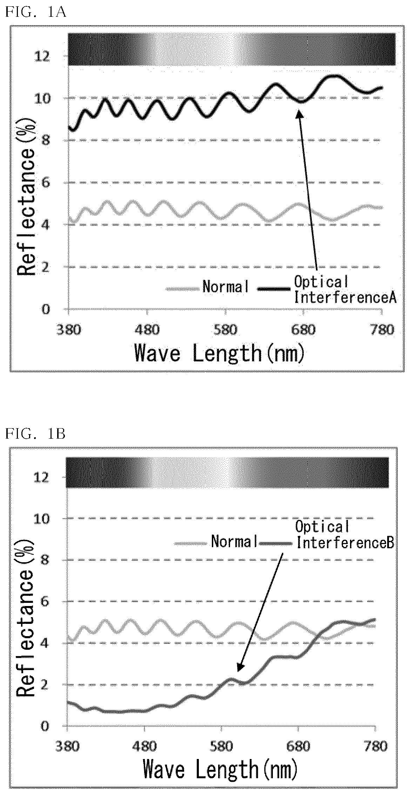

For the substrate layer prepared in Reference Example 1, the light reflectance at a wavelength of 380 to 780 nm on the high refractive index layer (refractive index: 1.76) side was measured. The results are shown in FIG. 1A.

For the optical interference layer in the coating member obtained in Example 1, the light reflectance at a wavelength of 380 to 780 nm was measured. Specifically, using a spectrophotometer (SD 3000 manufactured by Nippon Denshoku Industries Co., Ltd.), the intensity of the reflected light beam (reflectance) was measured every 5 nm in a region having a thickness of 76 nm of the optical interference layer. The results are shown in FIG. 1B.

Here, a curve indicated as "optical interference" in each drawing is a measurement result regarding the optical interference layer. The curve indicated as "normal" is, for reference, the reflectance regarding a coated article having a substrate and a base layer.

(Example 2 to Example 9)

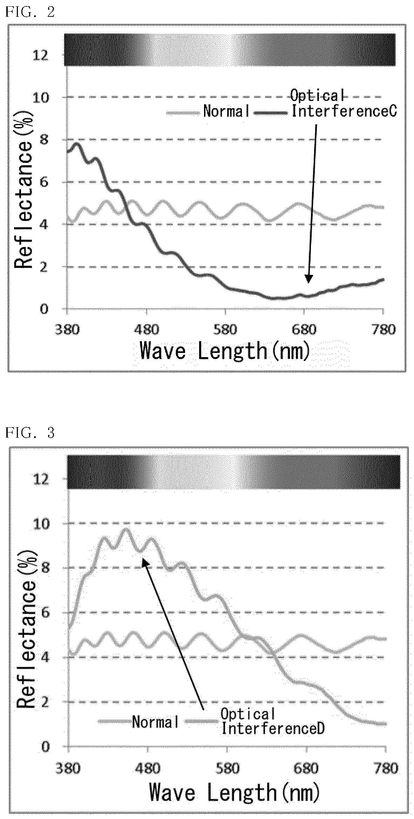

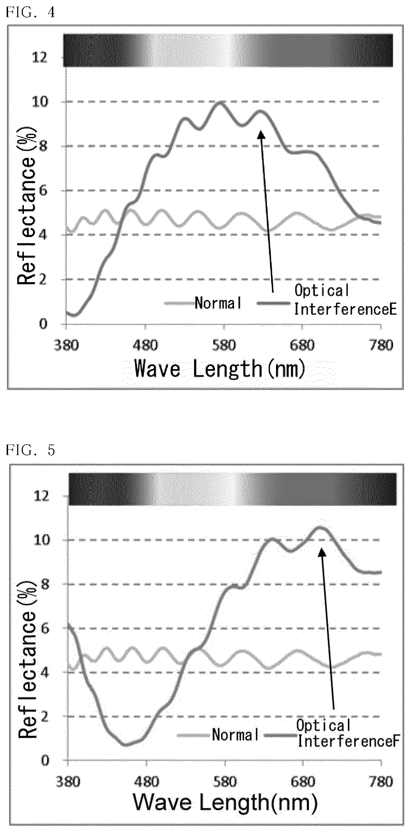

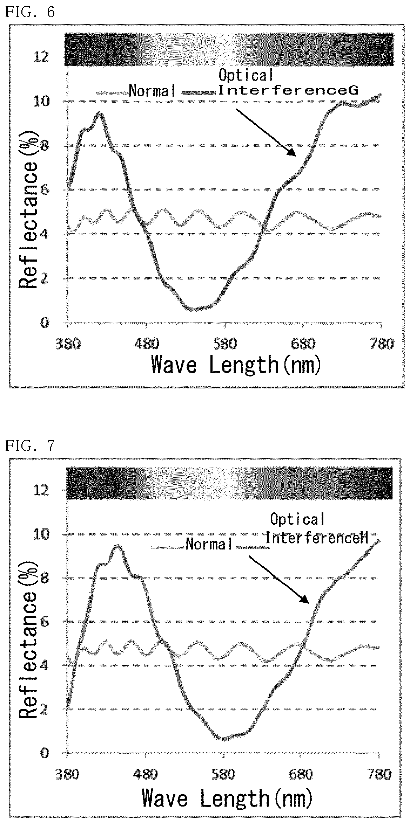

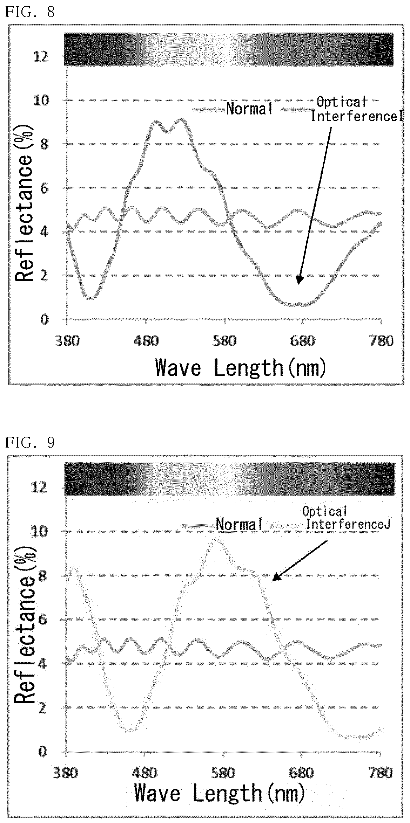

A coating member was formed in the same manner as in Example 1 except that the maximum thickness of the optical interference layer was changed. In addition, various evaluations were performed in the same manner as in Example 1. The results are shown in Table 1 and FIGS. 2 to 9.

(Example 10)

(Preparation Example B2)

Preparation of optical interference layer-forming composition 2

Using 0.63 parts by weight of Irgacure 127 (IGM) as a photoinitiator, 7.46 parts by weight of ARONIX M-402 (Toagosei Co., Ltd.) as an ultraviolet curable resin, 39.46 parts by weight of THRULYA 4320 (manufactured by JGC Catalysts and Chemicals Ltd.) as fine particles for adjusting a refractive index, and propylene glycol monomethyl ether (PGM) as a solvent, an optical interference layer-forming composition 2 was prepared such that the solid concentration was adjusted to 30%.

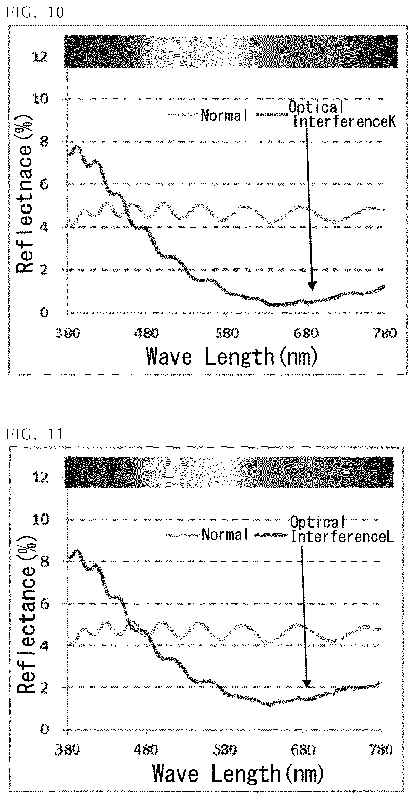

A coating member was formed in the same manner as in Example 1 except that a 120 nm thick optical interference layer was formed using the obtained optical interference layer-forming composition 2. Further, various physical properties, etc. were evaluated in the same manner as in Example 1. The refractive index of the optical interference layer was 1.37. Detailed physical properties, etc. of Example 10 are shown in Table 2. FIG. 10 illustrates a result regarding reflectance.

(Example 11)

(Preparation Example B3)

Preparation of optical interference layer-forming composition 3

Using 0.63 parts by weight of Irgacure 127 (IGM) as a photoinitiator, 7.46 parts by weight of ARONIX M-402 (Toagosei Co., Ltd.) as an ultraviolet curable resin, 6.42 parts by weight of THRULYA 4320 (manufactured by JGC Catalysts and Chemicals Ltd.) as fine particles for adjusting a refractive index, and propylene glycol monomethyl ether (PGM) as a solvent, an optical interference layer-forming composition 3 was prepared such that the solid concentration was adjusted to 30%.

A coating member was formed in the same manner as in Example 1 except that a 120 nm thick optical interference layer was formed using the obtained optical interference layer-forming composition 3. Further, various physical properties, etc. were evaluated in the same manner as in Example 1. The refractive index of the optical interference layer was 1.48. Detailed physical properties, etc. of Example 11 are shown in Table 2. FIG. 11 illustrates a result regarding reflectance.

(Example 12)

(Preparation Example B4)

Preparation of optical interference layer-forming composition 4

Using 0.63 parts by weight of Irgacure 127 (IGM) as a photoinitiator, 5.60 parts by weight of ARONIX M-402 (Toagosei Co., Ltd.) and 1.86 parts by weight of ARONIX M-211B (Toagosei Co., Ltd.) as an ultraviolet curable resin, and propylene glycol monomethyl ether (PGM) as a solvent, an optical interference layer-forming composition 4 was prepared such that the solid concentration was adjusted to 30%.

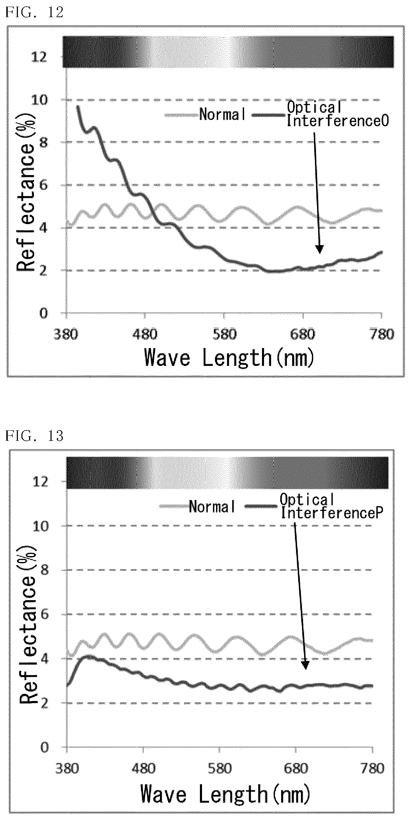

A coating member was formed in the same manner as in Example 1 except that a 120 nm thick optical interference layer was formed using the obtained optical interference layer-forming composition 4. Further, various physical properties, etc. were evaluated in the same manner as in Example 1. The refractive index of the optical interference layer was 1.52. Detailed physical properties, etc. of Example 12 are shown in Table 2. FIG. 12 illustrates a result regarding reflectance.

(Example 13)

A coating member was formed in the same manner as in Example 1 except that the substrate layer 2 was used and the maximum thickness of the optical interference layer was adjusted to 120 nm. Further, various physical properties, etc. were evaluated in the same manner as in Example 1. Detailed physical properties, etc. of Example 13 are shown in Table 2. FIG. 13 illustrates a result regarding reflectance.

(Example 14)

(Preparation Example B5)

Preparation of optical interference layer-forming composition 5

Using 0.63 parts by weight of Irgacure 127 (IGM) as a photoinitiator, 6.93 parts by weight of ARONIX M-402 (Toagosei Co., Ltd.) as an ultraviolet curable resin, by weight of THRULYA 4320 (manufactured by JGC Catalysts and Chemicals Ltd.) as fine particles for adjusting a refractive index, and propylene glycol monomethyl ether (PGM) as a solvent, an optical interference layer-forming composition 5 was prepared such that the solid concentration was adjusted to 30%.

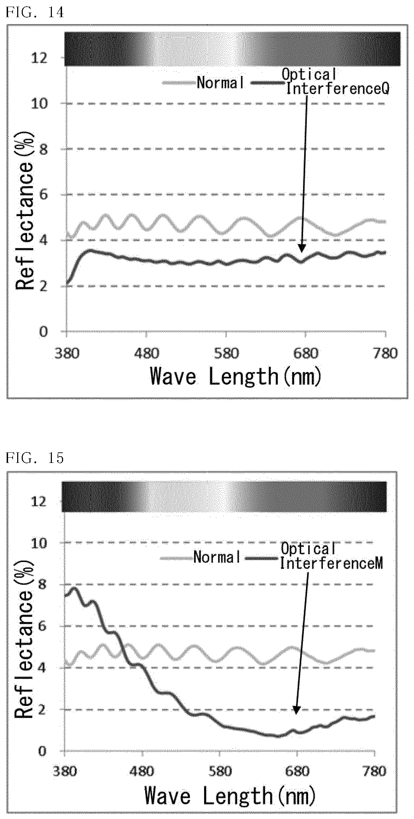

A coating member was formed in the same manner as in Example 1 except that a 120 nm thick optical interference layer was formed using the obtained optical interference layer-forming composition 5. Further, various physical properties, etc. were evaluated in the same manner as in Example 1. The refractive index of the optical interference layer was 1.42. Detailed physical properties, etc. of Example 14 are shown in Table 2. FIG. 14 illustrates a result regarding reflectance.

(Example 15)

A coating member was formed in the same manner as in Example 1 except that, an optical interference layer-forming composition was adjusted such that 900 parts by mass of an organic solvent (PGM) per 100 parts by mass of the resin solid content was contained in the optical interference layer-forming composition 1 prepared in Preparation Example B1. Further, various physical properties, etc. were evaluated in the same manner as in Example 1. Detailed physical properties, etc. of Example 14 are shown in Table 2. FIG. 15 illustrates a result regarding reflectance.

(Example 16)

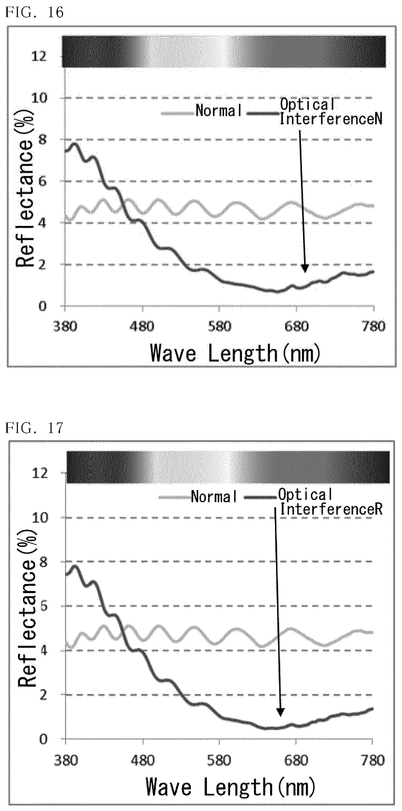

A coating member was formed in the same manner as in Example 1 except that, an optical interference layer-forming composition was adjusted such that 8000 parts by mass of an organic solvent (PGM) per 100 parts by mass of the resin solid content was contained in the optical interference layer-forming composition 1 prepared in Preparation Example B1. Further, various physical properties, etc. were evaluated in the same manner as in Example 1. Detailed physical properties, etc. of Example 14 are shown in Table 2. FIG. 16 illustrates a result regarding reflectance.

(Example 17)

(Preparation Example B6)

Preparation of optical interference layer-forming composition 6

Using 0.63 parts by weight of Irgacure 127 (IGM) as a photoinitiator, 6.93 parts by weight of ARONIX M-402 (Toagosei Co., Ltd.) as an ultraviolet curable resin, 2.67 parts by weight of DAC-HP (DAIKIN Industries, Ltd.) as a fluorine-based additive, 33.72 parts by weight of THRULYA 4320 (manufactured by JGC Catalysts and Chemicals Ltd.) as fine particles for adjusting a refractive index, and propylene glycol monomethyl ether (PGM) as a solvent, an optical interference layer-forming composition 6 was prepared such that the solid concentration was adjusted to 30%.

A coating member was formed in the same manner as in Example 1 except that a 120 nm thick optical interference layer was formed using the obtained optical interference layer-forming composition 6. Further, various physical properties, etc. were evaluated in the same manner as in Example 1. The refractive index of the optical interference layer was 1.38. Detailed physical properties, etc. of Example 14 are shown in Table 2. FIG. 17 illustrates a result regarding reflectance.

(Example 18)

(Preparation Example B7)

Preparation of optical interference layer-forming composition 7

Using 0.63 parts by weight of Irgacure 127 (IGM) as a photoinitiator, 4.16 parts by weight of ARONIX M-402 (Toagosei Co., Ltd.) as an ultraviolet curable resin, 2.77 parts by weight of UN-906S (Negami Chemical Industrial Co., Ltd.) as a silicone-modified urethane acrylate, 2.67 parts by weight of DAC-HP (DAIKIN Industries, Ltd.) as a fluorine-based additive, 33.72 parts by weight of THRULYA 4320 (manufactured by JGC Catalysts and Chemicals Ltd.) as fine particles for adjusting a refractive index, and propylene glycol monomethyl ether (PGM) as a solvent, an optical interference layer-forming composition 7 was prepared such that the solid concentration was adjusted to 30%.

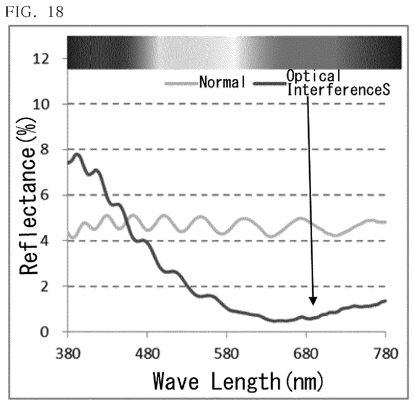

A coating member was formed in the same manner as in Example 1 except that a 120 nm thick optical interference layer was formed using the obtained optical interference layer-forming composition 7. Further, various physical properties, etc. were evaluated in the same manner as in Example 1. The refractive index of the optical interference layer was 1.38. Detailed physical properties, etc. of Example 14 are shown in Table 2. FIG. 18 illustrates a result regarding reflectance.

(Comparative Example 1 to Comparative Example 4)

Comparative Examples 1 to 3 are comparative examples in which the optical interference layer-forming composition according to the present disclosure prepared in Preparation Example 1, which is a composition for inkjet coating, was applied using a coating method other than the inkjet method. Detailed results are in Table 3. As can be understood from this result, when the composition for inkjet coating was applied by other methods, it was not possible to obtain a coating film superior in reflection characteristics and design property.

Comparative Example 4 is a comparative example in which the film thickness of the optical interference layer is outside the scope of the present disclosure. Detailed results are in Table 3. As can be understood from this result, when the optical interference layer exceeds a specific film thickness, it was not possible to perform patterning of a coating film and it was not possible to form a coating film superior in design property such as gradation.

(Comparative example 5)

(Preparation Example 8)

Production of hydroxyl group-containing acrylic resin (1)

A vessel equipped with a stirrer, a temperature controller, and a reflux condenser was charged with 30 g of butyl acetate, which was then heated to 120°C. Next, a monomer mixture having the following composition (20 parts of styrene, 15.3 parts of n-butyl acrylate, 27.9 parts of n-butyl methacrylate, 36 parts of 2-hydroxypropyl methacrylate, and 0.8 parts of acrylic acid), 12 parts of Kayaester O, and 6 parts of butyl acetate were added dropwise simultaneously over 3 hours and then were left standing for 30 minutes. Then, a solution of 0.5 parts of Kayaester O and 4 parts of butyl acetate was added dropwise over 30 minutes, and the reaction solution was stirred for 1 hour and the rate of change to resin was raised, and then the reaction was terminated. Thus, a hydroxyl group-containing acrylic resin (1) having a solid content of 70% by mass, a number-average molecular weight of 3800, a hydroxyl value of 140 mg/KOH, an acid value of 6.2 mg/KOH, and an SP value of 10.6 was obtained.

Preparation of clear coating composition

A polyol resin solution which react with hardener of a two-component clear coating composition was prepared by sequentially adding 60.0 parts, in terms of resin solid content, of the hydroxyl group-containing acrylic resin (1) of Preparation Example 8, 57.0 parts of methyl amyl ketone, and 22.0 parts of DBE (manufactured by Shoei Chemical Co., Ltd.), and sufficiently stirring the mixture with an agitator.

A hardener for a two-component clear coating composition was prepared by sequentially adding 40.0 parts, in solid content, of "Desmodur N-3300" (NCO active ingredient content: 22%) manufactured by Sumitomo Bayer Urethane Co., Ltd. and 2-ethylethoxypropanol to another metal container, and sufficiently stirring the mixture.

Optical interference layer-forming composition 8

An optical interference layer-forming composition 8 was prepared by using the clear coating composition, 452.01 parts by weight of THRULYA 4320 (JGC Catalysts and Chemicals Ltd.) as fine particles for adjusting a refractive index, and propylene glycol monomethyl ether (PGM) as a solvent, and adjusting the solid concentration to 30%. An optical interference layer was formed in the same manner as in Example 1. Detailed results are in Table 3.

As a result, the obtained coating member could not have sufficient hardness.

(Comparative Example 6 and Comparative Example 7)

Comparative Examples 8 and 9 are comparative examples in which the value obtained by subtracting the refractive index of the optical interference layer from the refractive index of the substrate layer,

(refractive index of substrate layer - refractive index of optical interference layer) is outside the scope of the present disclosure.

Various physical properties, etc. were evaluated in the same manner as in Example 1 except that the substrate layer 2 was used.

The results are in Table 3. As a result, there was no color tone change, and the design property was poor.

(Reference Example 2 and Reference Example 3)

In Reference Examples 2 and 3, a composition that was not supposed to be used in inkjet coating and was capable of forming an optical interference layer using a method other than an inkjet method such as screen printing was applied by an inkjet method to form a coating film. For example, in Reference Example 2, the viscosity was extremely low, and when inkjet coating was performed, unevenness, poor finish, etc. occurred. On the other hand, in Reference Example 3, the viscosity was high, and a coating film having a thickness of 600 nm or less could not be formed by an inkjet method.

[Table 1A]

| | | Reference Example 1 | Example 1 | Example 2 | Example 3 | Example 4 |
|---|---|---|---|---|---|---|
| Outermost layer configuration | Film thickness | 0 | 76 | 129 | 174 | 217 |
| | Solvent content | 3000phr | 3000phr | 3000phr | 3000phr | 3000phr |
| | Resin composition (Preparation Example B) | Preparation Example 1 (n = 1.38) | Preparation Example 1 (n = 1.38) | Preparation Example 1 (n = 1.38) | Preparation Example 1 (n = 1.38) | Preparation Example 1 (n = 1.38) |
| | Film formation method | IJ | IJ | IJ | IJ | IJ |
| Article to be coated | | 1 | 1 | 1 | 1 | 1 |
| Refractive index difference between article to be coated and optical interference layer | | - | 0.38 | 0.38 | 0.38 | 0.38 |

(continued)

| | | Reference Example 1 | Example 1 | Example 2 | Example 3 | Example 4 |
|---|---|---|---|---|---|---|
| Coated article properties | Measured L | 37.2 | 12.8 | 14.6 | 31.5 | 35.4 |
| | Measured a | 0.8 | 6.6 | 0.7 | -5.9 | -3.7 |
| | Measured b | 0.4 | 10.5 | -20.8 | -8.1 | 17.1 |
| | L(i)-L(ii) | - | 24.4 | 22.6 | 5.7 | 1.8 |
| | a(i)-a(ii) | - | -5.8 | 0.1 | 6.8 | 4.5 |
| | b(i)-b(ii) | - | -10.1 | 21.2 | 8.5 | -16.7 |
| | $\Delta E$ | - | 27.0 | 31.0 | 12.3 | 17.4 |
| | Whether patterning can be attained or not. | ○ | ○ | ○ | O | O |
| | Unevenness and finish | ○ | ○ | ○ | ○ | ○ |
| | Hardness | 4H | 4H | 4H | 4H | 4H |

[Table 1B]

| | | Example 5 | Example 6 | Example 7 | Example 8 | Example 9 |
|---|---|---|---|---|---|---|
| Outermost layer configuration | Film thickness | 260 | 307 | 326 | 379 | 431 |
| | Solvent content | 3000phr | 3000phr | 3000phr | 3000phr | 3000phr |
| | Resin composition (Preparation Example B) | Preparation Example 1 (n = 1.38) | Preparation Example 1 (n = 1.38) | Preparation Example 1 (n = 1.38) | Preparation Example 1 (n = 1.38) | Preparation Example 1 (n = 1.38) |
| | Film formation method | IJ | IJ | IJ | IJ | IJ |
| Article to be coated | | 1 | 1 | 1 | 1 | 1 |
| Refractive index difference between article to be coated and optical interference layer | | 0.38 | 0.38 | 0.38 | 0.38 | 0.38 |
| Coated article properties | Measured L | 27.9 | 15.0 | 18.4 | 30.5 | 32.0 |
| | Measured a | 10.0 | 25.4 | 2.5 | -23.2 | -0.5 |
| | Measured b | 29.5 | -27.0 | -28.0 | 7.2 | 26.3 |
| | L(i)-L(ii) | 9.2 | 22.2 | 18.8 | 6.7 | 5.1 |
| | a(i)-a(ii) | -9.2 | -24.5 | -1.7 | 24.1 | 1.3 |
| | b(i)-b(ii) | -29.1 | 27.4 | 28.4 | -6.7 | -25.9 |
| | $\Delta E$ | 31.9 | 43.0 | 34.1 | 25.9 | 26.5 |
| | Whether patterning can be attained or not. | ○ | ○ | ○ | ○ | ○ |
| | Unevenness and finish | ○ | ○ | ○ | ○ | ○ |
| | Hardness | 4H | 4H | 4H | 4H | 4H |

[Table 2A]

| | | Example 10 | Example 11 | Example 12 | Example 13 | Example 14 |
|---|---|---|---|---|---|---|
| Outermost layer configuration | Film thickness | 120 | 120 | 120 | 120 | 120 |
| | Solvent content | 3000phr | 3000phr | 3000phr | 3000phr | 3000phr |
| | Resin composition (Preparation Example B) | Preparation Example 2 (n = 1.37) | Preparation Example 3 (n = 1.48) | Preparation Example 4 (n = 1.52) | Preparation Example 1 (n = 1.38) | Preparation Example 5 (n = 1.42) |
| | Film formation method | IJ | IJ | IJ | IJ | IJ |
| Article to be coated | | 1 | 1 | 1 | 2 | 2 |
| Refractive index difference between article to be coated and optical interference layer | | 0.39 | 0.28 | 0.24 | 0.13 | 0.09 |
| Coated article properties | Measured L | 14.1 | 16.7 | 20.6 | 17.1 | 19.0 |
| | Measured a | 0.6 | 0.3 | -0.8 | 1.4 | 1.1 |
| | Measured b | -21.4 | -19.7 | -15.3 | -7.9 | -6.1 |
| | L(i)-L(ii) | 23.1 | 20.5 | 16.6 | 8.8 | 6.8 |
| | a(i)-a(ii) | 0.2 | 0.5 | 1.6 | -1.7 | -1.4 |
| | b(i)-b(ii) | 21.8 | 20.1 | 15.7 | 7.4 | 5.6 |
| | ΔE | 31.8 | 28.7 | 22.9 | 11.6 | 8.9 |
| | Whether patterning can be attained or not. | ○ | ○ | ○ | ○ | ○ |
| | Unevenness and finish | ○ | ○ | ○ | ○ | O |
| | Hardness | 4H | 4H | 4H | 4H | 4H |

[Table 2B]

| | | Example 15 | Example 16 | Example 17 | Example 18 |
|---|---|---|---|---|---|
| Outermost layer configuration | Film thickness | 120 | 120 | 120 | 120 |
| | Solvent content | 900phr | 8000phr | 3000phr | 3000phr |
| | Resin composition (Preparation Example B) | Preparation Example 1 (n = 1.38) | Preparation Example 1 (n = 1.38) | Preparation Example 6 (+ fluorine) (n=1.38) | Preparation Example 7 (fluorine + silicone-modified) (n=1.38) |
| | Film formation method | IJ | IJ | IJ | IJ |
| Article to be coated | | 1 | 1 | 1 | 1 |
| Refractive index difference between article to be coated and optical interference layer | | 0.38 | 0.38 | 0.38 | 0.38 |

(continued)

| | | Example 15 | Example 16 | Example 17 | Example 18 |
|---|---|---|---|---|---|
| Coated article properties | Measured L | 15.7 | 14.8 | 14.6 | 14.2 |
| | Measured a | 1.0 | 0.8 | 0.7 | 0.7 |
| | Measured b | -19.6 | -20.1 | -20.8 | -20.4 |
| | L(i)-L(ii) | 21.5 | 22.4 | 22.6 | 23.0 |
| | a(i)-a(ii) | -0.2 | 0.0 | 0.1 | 0.1 |
| | b(i)-b(ii) | 20.1 | 20.5 | 21.2 | 20.8 |
| | $\Delta E$ | 29.4 | 30.4 | 31.0 | 31.0 |
| | Whether patterning can be attained or not. | ○ | ○ | ○ | ○ |
| | Unevenness and finish | ○ | ○ | ○ | ○ |
| | Hardness | 4H | 4H | 4H | 4H |

[Table 3]

| | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|
| Outermost layer configuration | Film thickness | Not printable | Not measurable due to much unevenness | 120 | 715 | 120 | 120 | 120 |
| | Solvent content | 3000phr | 3000phr | 3000phr | 3000phr | 3000phr | 3000phr | 3000phr |
| | Resin configuration | Preparation Example 1 | Preparation Example 1 | Preparation Example 1 | Preparation Example 1 | Preparation Example 7 (thermal curing) | Preparation Example 3 (n = 1.48) | Preparation Example 4 (n = 1.52) |
| | Film formation method | Screen printing | Gravure printing | Spin coating | IJ | IJ | IJ | IJ |
| Article to be coated | | 1 | 1 | 1 | 1 | 1 | 2 | 2 |
| Refractive index difference between article to be coated and optical interference layer | | 0.38 | 0.38 | 0.38 | 0.38 | 0.38 | 0.03 | -0.01 |
| Coated article properties | Measured L | Not printable | Not measurable due to much unevenness | 14.7 | 18.5 | 14.2 | 25.1 | 25.9 |
| | Measured a | Not printable | Not measurable due to much unevenness | 0.6 | 1.1 | 0.7 | 0.1 | -0.3 |
| | Measured b | Not printable | Not measurable due to much unevenness | -21.2 | -23.0 | -20.3 | -0.3 | -0.6 |
| | L(i)-L(ii) | Not printable | Not measurable due to much unevenness | 22.5 | 18.7 | 23.0 | 0.8 | 0.0 |
| | a(i)-a(ii) | Not printable | Not measurable due to much unevenness | 0.2 | -0.3 | 0.1 | -0.4 | 0.0 |
| | b(i)-b(ii) | Not printable | Not measurable due to much unevenness | 21.6 | 23.4 | 20.7 | -0.2 | 0.1 |
| | ΔE | Not printable | Not measurable due to much unevenness | 31.2 | 30.0 | 30.9 | 0.9 | 0.1 |
| | Whether patterning can be attained or not. | Not printable | × | × (Unable to pattern) | △ | ○ | ○ | ○ |
| | Unevenness and finish | Not printable | × | × (Unable to pattern) | △ | O | ○ | ○ |
| | Hardness | 4H | 4H | 4H | 4H | × 3H | 4H | 4H |

According to the results of Examples, the coating member according to the present disclosure is a coating member capable of improving both an anti-reflection property and a design property. In addition, it can suppress light leakage in the display region and the non-display region, and is superior in anti-reflection property.

In addition, since it has high patterning property, it is understood to be a coating member rich in design selectivity. In addition, it is a coating member having no unevenness or extremely little unevenness, and has good coating film hardness.

INDUSTRIAL APPLICABILITY

The coating member of the present disclosure can improve both an anti-reflection property and a design property. Furthermore, there is provided a coating member having a high patterning property and being rich in design selectivity.

**Claims**

1. A method for producing a coating member comprising a substrate layer and an optical interference layer formed from an optical interference layer-forming composition, the method comprising:

   applying the optical interference layer-forming composition to at least a part of a viewing side surface of the substrate layer by an inkjet method; and
   applying an active energy ray to form the optical interference layer wherein
   the optical interference layer has a thickness in a range of more than 0 nm and less than or equal to 600 nm,
   the optical interference layer has a relationship of 0.08 < (a refractive index of the substrate layer) - (a refractive index of the optical interference layer) < 0.45,
   where a value of L, a value of a, and a value of b of a hue in the substrate layer are denoted by L(i), a(i), and b(i), and a value of L, a value of a, and a value of b as defined in the L*a*b CIE 1976 color system of a hue of the optical interference layer at a thickness of t (nm) are denoted by $L_t$(ii), $a_t$(ii), and bt(ii), and
   where t is more than 0 nm and less than or equal to 600 nm, L(i), a(i), and b(i) in the substrate layer, and Lt(ii), at(ii), and bt(ii) at the thickness of t (nm) in the optical interference layer satisfy at least one of the following formulae (1) to (3):

$$0 < L(i) - L_t(ii) < 35 \qquad \text{Formula (1)}$$

$$-30 < a(i) - a_t(ii) < 30 \qquad \text{Formula (2)}$$

$$-40 < b(i) - b_t(ii) < 40 \qquad \text{Formula (3).}$$

2. The method according to claim 1, wherein

   the optical interference layer has a thickness in a range of more than 0 nm and less than or equal to 600 nm and has a minimum thickness ($t_{min}$) and a maximum thickness ($t_{max}$),
   the optical interference layer has a relationship of the minimum thickness ($t_{min}$) < the maximum thickness ($t_{max}$).

3. The method according to claim 1 or 2, wherein

   where a value of L, a value of a, and a value of b of a hue in the substrate layer are denoted by L(i), a(i), and b(i), and a value of L, a value of a, and a value of b of a hue in the optical interference layer at a thickness of t (nm) are defined by Lt(ii), at(ii), and bt(ii), and
   where t is more than 0 nm and less than or equal to 600 nm,
   a difference $\Delta E$ between a hue in the substrate layer and a hue at a thickness of t (nm) in the optical interference layer exhibits a relationship of

$$1 < \Delta E < 50.$$

4. The method according to any one of claims 1 to 3, wherein the optical interference layer-forming composition comprises 300 parts by mass or more and 9900 parts by mass of an organic solvent per 100 parts by mass of the resin solid content.

5. The method according to any one of claims 1 to 4, wherein

   the optical interference layer-forming composition comprises an optical interference layer-forming resin component, and
   the optical interference layer-forming resin component has an unsaturated double bond and is an active energy ray-curable resin component.

6. The method according to any one of claims 1 to 5, wherein the optical interference layer-forming composition comprises a polyfunctional acrylate and a fluororesin.

7. The method according to any one of claims 1 to 6, wherein the optical interference layer-forming composition comprises a polyfunctional acrylate, a silicone-modified acrylate, and a fluororesin.

8. The method according to any one of claims 1 to 7, wherein the coating member is a member for decoration to be used in a vehicle cabin.

**Patentansprüche**

1. Verfahren zur Herstellung eines Beschichtungselements, umfassend eine Substratschicht und eine optische Interferenzschicht, die aus einer eine optische Interferenzschicht bildenden Zusammensetzung ausgebildet ist, wobei das Verfahren Folgendes umfasst:

   Aufbringen der eine optische Interferenzschicht bildenden Zusammensetzung auf zumindest einen Teil einer Betrachtungsseitenoberfläche der Substratschicht durch ein Tintenstrahlverfahren; und
   Anwenden eines aktiven Energiestrahls, um die optische Interferenzschicht zu bilden, wobei
   die optische Interferenzschicht eine Dicke im Bereich von mehr als 0 nm und weniger als oder gleich 600 nm aufweist,
   die optische Interferenzschicht eine Beziehung von 0,08 < (ein Brechungsindex der Substratschicht) - (ein Brechungsindex der optischen Interferenzschicht) < 0,45 aufweist,
   wobei ein Wert von L, ein Wert von a und einen Wert von b eines Farbtons in der Substratschicht durch $L(i)$, $a(i)$ und $b(i)$ bezeichnet werden und
   ein Wert von L, ein Wert von a und ein Wert von b, wie in dem L*a*b-CIE-1976-Farbsystem definiert, eines Farbtons der optischen Interferenzschicht bei einer Dicke t(nm) durch $L_t(ii)$, $a_t(ii)$ und $b_t(ii)$ bezeichnet werden und wobei t mehr als 0 nm und weniger als oder gleich 600 nm ist, $L(i)$, $a(i)$ und $b(i)$ in der Substratschicht und $L_t(ii)$, $a_t(ii)$ und $b_t(ii)$ bei der Dicke t (nm) in der optischen Interferenzschicht zumindest eine der folgenden Formeln (1) bis (3) erfüllen:

$$0 < L(i) - L_t(ii) < 35 \qquad \text{Formel (1)}$$

$$-30 < a(i) - a_t(ii) < 30 \qquad \text{Formel (2)}$$

$$-40 < b(i) - b_t(ii) < 40 \qquad \text{Formel (3)}$$

2. Verfahren nach Anspruch 1, wobei

   die optische Interferenzschicht eine Dicke im Bereich von mehr als 0 nm und weniger als oder gleich 600 nm aufweist und eine minimale Dicke $(t_{min})$ und eine maximale Dicke $(t_{max})$ aufweist,
   wobei die optische Interferenzschicht eine Beziehung minimale Dicke $(t_{min})$ < maximale Dicke $(t_{max})$ aufweist.

3. Verfahren nach Anspruch 1 oder 2, wobei

   wenn ein Wert von L, ein Wert von a und ein Wert von b eines Farbtons in der Substratschicht durch $L(i)$, $a(i)$ und b(i) bezeichnet werden und
ein Wert von L, ein Wert von a und ein Wert von b eines Farbtons in der optischen Interferenzschicht bei einer Dicke von t (nm) durch Lt(ii), $a_t$(ii) und $b_t$(ii) definiert sind und
wobei t größer als 0 und weniger als oder gleich 600 nm ist,
eine Differenz ΔE zwischen einem Farbton in der Substratschicht und einem Farbton bei einer Dicke von t (nm) in der optischen Interferenzschicht eine Beziehung von

$$1 < \Delta E < 50$$

aufweist.

4. Verfahren nach einem der Ansprüche 1 bis 3, wobei die eine optische Interferenzschicht bildende Zusammensetzung 300 Massenteile oder mehr und 9.900 Massenteile eines organischen Lösungsmittels bezogen auf 100 Massenteile des Gehalts an festem Harz umfasst.

5. Verfahren nach einem der Ansprüche 1 bis 4, wobei

die eine optische Interferenzschicht bildende Zusammensetzung eine eine optische Interferenzschicht bildende Harzkomponente umfasst und
die eine optische Interferenzschicht bildende Harzkomponente eine ungesättigte Doppelbindung aufweist und eine durch aktive Energiestrahlen härtbare Harzkomponente ist.

6. Verfahren nach einem der Ansprüche 1 bis 5, wobei die eine optische Interferenzschicht bildende Zusammensetzung ein polyfunktionelles Acrylat und ein Fluorharz umfasst.

7. Verfahren nach einem der Ansprüche 1 bis 6, wobei die eine optische Interferenzschicht bildende Zusammensetzung ein polyfunktionelles Acrylat, ein Silikon-modifiziertes Acrylat und ein Fluorharz umfasst.

8. Verfahren nach einem der Ansprüche 1 bis 7, wobei das Beschichtungselement ein Element zur Dekoration ist, das in einem Fahrzeuginneren zu verwenden ist.

**Revendications**

1. Procédé de production d'un élément de revêtement comprenant une couche de substrat et une couche d'interférence optique formée à partir d'une composition de formation de couche d'interférence optique, le procédé comprenant les étapes consistant à :

appliquer la composition de formation de couche d'interférence optique à au moins une partie d'une surface latérale de visualisation de la couche de substrat par l'intermédiaire d'un procédé à jet d'encre ; et
appliquer un rayonnement d'énergie active pour former la couche d'interférence optique,
dans lequel
la couche d'interférence optique présente une épaisseur dans une plage supérieure à 0 nm et inférieure ou égale à 600 nm,
la couche d'interférence optique présente une relation de 0,08 < (un indice de réfraction de la couche de substrat) - (un indice de réfraction de la couche d'interférence optique) < 0,45,
où une valeur de L, une valeur de a et une valeur de b d'une teinte dans la couche de substrat sont désignées par L(i), a(i) et b(i), et
une valeur de L, une valeur de a et une valeur de b telles que définies dans le système de couleurs L*a*b Cie 1976 d'une teinte de la couche d'interférence optique à une épaisseur de t (nm) sont désignées par $L_t$(ii), $a_t$(ii) et $b_t$(ii), et
où t est supérieure à 0 nm et inférieure ou égale à 600 nm,
L(i), a(i) et b(i) dans la couche de substrat, et
$L_t$(ii), $a_t$(ii) et $b_t$(ii) à l'épaisseur de t (nm) dans la couche d'interférence optique satisfont au moins une des formules (1) à (3) suivantes :

$$0 < L(i) - L_t(ii) < 35 \quad \text{Formule (1)}$$

$$- 30 < a(i) - a_t(ii) < 30 \qquad \text{Formule (2)}$$

$$- 40 < b(i) - b_t(ii) < 40 \qquad \text{Formule (3).}$$

2. Procédé selon la revendication 1, dans lequel

   la couche d'interférence optique présente une épaisseur dans une plage supérieure à 0 nm et inférieure ou égale à 600 nm et présente une épaisseur minimale ($t_{min}$) et une épaisseur maximale ($t_{max}$),
   la couche d'interférence optique présente une relation de l'épaisseur minimale ($t_{min}$) < l'épaisseur maximale ($t_{max}$).

3. Procédé de selon la revendication 1 ou 2, dans lequel

   où une valeur de L, une valeur de a et une valeur de b d'une teinte dans la couche de substrat sont désignées par L(i), a(i) et b(i), et
   une valeur de L, une valeur de a et une valeur de b d'une teinte dans la couche d'interférence optique à une épaisseur de t (nm) sont définies par $L_t$(ii), $a_t$(ii) et bt(ii), et
   où t est supérieure à 0 nm et inférieure ou égale à 600 nm,
   une différence ΔE entre une teinte dans la couche de substrat et une teinte à une épaisseur de t (nm) dans la couche d'interférence optique présente une relation de

$$1 < \Delta E < 50.$$

4. Procédé selon l'une quelconque des revendications 1 à 3, dans lequel la composition de formation de couche d'interférence optique comprend 300 parties en masse ou plus et 9900 parties en masse d'un solvant organique pour 100 parties en masse de la teneur en résine solide.

5. Procédé selon l'une quelconque des revendications 1 à 4, dans lequel

   la composition de formation de couche d'interférence optique comprend un composant de résine de formation de couche d'interférence optique, et
   le composant de résine de formation de couche d'interférence optique présente une double liaison insaturée et est un composant de résine durcissable par rayonnement d'énergie active.

6. Procédé selon l'une quelconque des revendications 1 à 5, dans lequel la composition de formation de couche d'interférence optique comprend un acrylate polyfonctionnel et une résine fluorée.

7. Procédé selon l'une quelconque des revendications 1 à 6, dans lequel la composition de formation de couche d'interférence optique comprend un acrylate polyfonctionnel, un acrylate modifié par silicone et une résine fluorée.

8. Procédé selon l'une quelconque des revendications 1 à **7,** dans lequel l'élément de revêtement est un élément de décoration à utiliser dans une cabine de véhicule.

FIG. 1A

FIG. 1B

EP 3 974 068 B1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

FIG. 15

FIG. 16

FIG. 17

FIG. 18

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012088684 A

- WO 2008126528 A1